# EUROPEAN PATENT APPLICATION

(11) **EP 4 645 771 A1**
(43) Date of publication of application: **05.11.2025**
(21) Application number: 22969540.8
(22) Date of filing: 27.12.2022
(51) Int. Cl.: H04L 27/00

(54) **COMMUNICATION SCHEME MONITORING METHOD AND DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: RGTH
(86) International application number: PCT/CN2022/142497
(87) International publication number: WO 2024/138384

(57) **Abstract**

The present application relates to a communication scheme monitoring method and device. The communication scheme monitoring method comprises: a first communication device monitors the performance of a communication scheme; and when the communication scheme meets a performance monitoring condition, the first communication device triggers an event corresponding to the communication scheme. According to the embodiments of the present application, the performance of the communication scheme can be rationally monitored, thereby enabling the communication scheme to have better performance guarantee.

## Description

### TECHNICAL FIELD

The present disclosure relates to the field of communications, and in particular, to a monitoring method of a communication scheme and device.

### BACKGROUND

Wireless communication solution schemes based on artificial intelligence (AI) are increasingly used in wireless communication systems. Performance evaluations on such communication schemes are mainly performed based on inference performances of the communication schemes. However, in practical applications, performance guarantees of these communication schemes also need to be considered.

### SUMMARY

Embodiments of the present disclosure provide a monitoring method of a communication scheme and device, which may reasonably monitor performances of a communication scheme, and facilitate good performance guarantee of the communication scheme.

The embodiments of the present disclosure provide a monitoring method of a communication scheme, and the monitoring method of the communication scheme includes: performing, by a first communication device, performance monitoring on the communication scheme; and triggering, by the first communication device, an event corresponding to the communication scheme in a case where the communication scheme meets a performance monitoring condition.

The embodiments of the present disclosure provide a monitoring method of a communication scheme, and the monitoring method of the communication scheme includes: receiving, by a second communication device, an event triggered by a first communication device in a case where a performance monitoring condition is met.

The embodiments of the present disclosure provide a first communication device, including: a processing unit, configured to perform performance monitoring on a communication scheme; and to trigger an event corresponding to the communication scheme in a case where the communication scheme meets a performance monitoring condition.

The embodiments of the present disclosure provide a second communication device, including: a receiving unit, configured to receive an event triggered by a first communication device in a case where a performance monitoring condition is met.

The embodiments of the present disclosure provide a terminal device, and the terminal device includes a processor and a memory. The memory is configured to store a computer program therein, and the processor is configured to call the computer program stored in the memory and run the computer program, to enable the terminal device to perform the above-mentioned monitoring method of the communication scheme.

The embodiments of the present disclosure provide a network device, and the network device includes a processor and a memory. The memory is configured to store a computer program therein, and the processor is configured to call the computer program stored in the memory and run the computer program, to enable the network device to perform the above-mentioned monitoring method of the communication scheme.

The embodiments of the present disclosure provide a chip, and the chip is configured to implement the above-mentioned monitoring method of the communication scheme. Specifically, the chip includes: a processor, configured to call a computer program from a memory and run the computer program, to enable a device equipped with the chip to perform the above-mentioned monitoring method of the communication scheme.

The embodiments of the present disclosure provide a computer-readable storage medium, which is configured to store a computer program. The computer program, when run on a device, enables the device to perform the above-mentioned monitoring method of the communication scheme.

The embodiments of the present disclosure provide a computer program product, which includes computer program instructions. The computer program instructions enable a computer to perform the above-mentioned monitoring method of the communication scheme.

The embodiments of the present disclosure provide a computer program, and the computer program, when run on a computer, enables the computer to perform the above-mentioned monitoring method of the communication scheme.

In the embodiments of the present disclosure, in a case where the communication scheme meets the performance monitoring condition, an event corresponding to the communication scheme is triggered, so that performances of the communication scheme may be reasonably monitored, so as to facilitate good performance guarantee of the communication scheme.

### BRIEF DESCRIPTION OF THE DRAWINGS

FIG. 1 is a schematic diagram of an application scenario in accordance with the embodiments of the present disclosure.
FIGS. 2a to 2d are relevant schematic diagrams of a wireless communication solution scheme based on AI.
FIG. 3 is a schematic flowchart of a monitoring method of a communication scheme in accordance with an embodiment of the present disclosure.
FIG. 4 is a schematic flowchart of another monitoring method of a communication scheme in accordance with an embodiment of the present disclosure.
FIG. 5 is a schematic flowchart of a monitoring method of a communication scheme in accordance with an embodiment of the present disclosure.
FIG. 6 is a schematic flowchart of another monitoring method of a communication scheme in accordance with an embodiment of the present disclosure.
FIG. 7 is a schematic diagram of a stability evaluation phase in accordance with the embodiments of the present disclosure.
FIG. 8 is a schematic diagram of another stability evaluation phase in accordance with the embodiments of the present disclosure.
FIG. 9 is a schematic diagram of periodically (time-based) triggering in accordance with the embodiments of the present disclosure.
FIG. 10 is a schematic diagram of network-triggering in accordance with the embodiments of the present disclosure.
FIG. 11 is a schematic diagram of event-triggering in accordance with the embodiments of the present disclosure.
FIGS. 12a to 12b are schematic diagrams of a stability evaluation phase in accordance with the embodiments of the present disclosure.
FIG. 13 is a schematic block diagram of a first communication device in accordance with an embodiment of the present disclosure.
FIG. 14 is a schematic block diagram of another first communication device in accordance with an embodiment of the present disclosure.
FIG. 15 is a schematic block diagram of a second communication device in accordance with an embodiment of the present disclosure.
FIG. 16 is a schematic block diagram of another second communication device in accordance with an embodiment of the present disclosure.
FIG. 17 is a schematic structural diagram of a communication device in accordance with the embodiments of the present disclosure.
FIG. 18 is a schematic structural diagram of a chip in accordance with the embodiments of the present disclosure.
FIG. 19 is a schematic block diagram of a communication system in accordance with the embodiments of the present disclosure.

### DETAILED DESCRIPTION

Technical solutions in the embodiments of the present disclosure will be described below with reference to the drawings in the embodiments of the present disclosure.

The technical solutions in the embodiments of the present disclosure may be applied to various communication systems, such as: a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication networks (non-terrestrial networks, NTN) system, a universal mobile telecommunications system (UMTS), wireless local area networks (WLAN), wireless fidelity (WiFi), a 5th-generation (5G) system, or other communication systems. Generally speaking, traditional communication systems support a limited number of connections and are easy to implement. However, with the development of the communication technologies, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication, etc. The embodiments of the present disclosure may be applied to these communication systems as well.

In an implementation, the communication system in the embodiments of the present disclosure may be applied to a carrier aggregation (CA) scenario, a dual connectivity (DC) scenario, or a standalone (SA) network deployment scenario.

In an implementation, the communication system in the embodiments of the present disclosure may be applied to an unlicensed spectrum, where the unlicensed spectrum may also be considered as a shared spectrum. Alternatively, the communication system in the embodiments of the present disclosure may be applied to a licensed spectrum, where the licensed spectrum may also be considered as an unshared spectrum.

In the embodiments of the present disclosure, various embodiments are described in conjunction with a network device and a terminal device, where the terminal device may be referred to as a user equipment (UE), an access terminal, a user unit, a user station, a mobile station, a mobile platform, a remote station, a remote terminal, a mobile device, a user terminal, a terminal, a wireless communication device, a user agent, or a user device, or the like.

The terminal device may be a station (ST) in the WLAN, a cellular phone, a cordless phone, a session initiation protocol (SIP) phone, a wireless local loop (WLL) station, a personal digital assistant (PDA) device, a handheld device with a wireless communication function, a computing device or another processing device connected to a wireless modem, an in-vehicle device, a wearable device, a terminal device in a next-generation communication system (e.g., an NR network), a terminal device in a future evolved public land mobile network (PLMN), or the like.

In the embodiments of the present disclosure, the terminal device may be deployed on land, including indoor or outdoor, handheld, wearable or in-vehicle; the terminal device may also be deployed on water (e.g., on a steamship); and the terminal device may also be deployed in air (e.g., on an airplane, on a balloon, or on a satellite).

In the embodiments of the present disclosure, the terminal device may be a mobile phone, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, or the like.

As an example but not a limitation, in the embodiments of the present disclosure, the terminal device may also be a wearable device. The wearable device may also be referred to as a wearable smart device, which is a general term for wearable devices developed by performing intellectualized design on daily wear (e.g., glasses, gloves, a watch, clothing, or shoes) using wearable technologies. The wearable device is a portable device that is worn directly on a body or integrated into clothes or accessories of users. The wearable device is not merely a hardware device, and implements powerful functions by software support as well as data interaction, or cloud interaction. Generalized wearable smart devices include devices (e.g., a smart watch or smart glasses) that are fully functional, large in size, and may implement full or partial functions without relying on smart phones, and devices (e.g., various smart bracelets or smart jewelries for monitoring physical signs) that only focus on a certain type of application function and need to be used in conjunction with other devices (e.g., smart phones).

In the embodiments of the present disclosure, the network device may be a device for communicating with a mobile device. The network device may be an access point (AP) in WLAN, a base station (base transceiver station, BTS) in GSM or CDMA, a base station (NodeB, NB) in WCDMA, an evolutional base station (evolutional NodeB, eNB or eNodeB) in LTE, or a relay station or an access point, or an in-vehicle device, a wearable device, and a network device (gNB) in an NR network, or a network device in a future evolved PLMN network, a network device in an NTN network, or the like.

As an example but not a limitation, in the embodiments of the present disclosure, the network device may have mobile characteristics. For example, the network device may be a mobile device. Optionally, the network device may be a satellite, or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station deployed on land, water or other places. In the embodiments of the present disclosure, a network device may provide a service for a cell, and a terminal device communicates with the network device through a transmission resource (e.g., a frequency domain resource, or a spectrum resource) used by the cell. The cell may be a cell corresponding to the network device (e.g., a base station), and the cell may belong to a macro base station or a base station corresponding to a small cell. The small cell here may include: a metro cell, a micro cell, a pico cell, or a femto cell, or the like. These small cells have characteristics of small coverage and low transmission power, and are applicable for providing high-speed data transmission services.

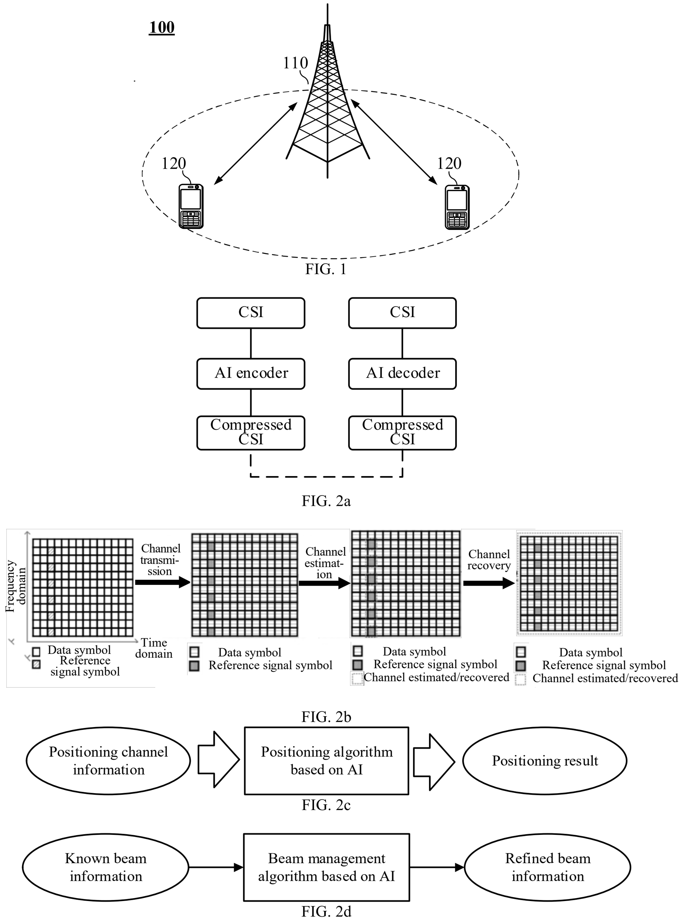

FIG. 1 exemplarily shows a communication system 100. The communication system includes a network device 110 and two terminal devices 120. In an implementation, the communication system 100 may include a plurality of network devices 110, and each of the network devices 110 may have a coverage in which other number of terminal devices 120 may be included, which is not limited in the embodiments of the present disclosure.

In an implementation, the communication system 100 may further include a mobility management entity (MME), an access and mobility management function (AMF), or other network entities, which is not limited in the embodiments of the present disclosure.

The network device may include an access network device and a core network device. That is, the wireless communication system further includes a plurality of core networks for communicating with the access network device. The access network device may be an evolutional base station (evolutional node B, abbreviated as eNB or e-NodeB), a macro base station, a micro base station (also referred to as a "small base station"), a pico base station, an access point (AP), a transmission point (TP) or a new generation base station (new generation Node B, gNodeB) in a long-term evolution (LTE) system, a next-generation mobile communication (next radio, NR) system or an authorized auxiliary access long-term evolution (LAA-LTE) system.

It should be understood that, in the embodiments of the present disclosure, a device with a communication function in a network/system may be referred to as a communication device. Taking the communication system illustrated in FIG. 1 as an example, the communication devices may include a network device with a communication function and a terminal device with a communication function. The network device and the terminal device may be specific devices in the embodiments of the present disclosure, which will not be repeated here. The communication devices may further include other devices, such as a network controller, a mobility management entity and other network entities, in the communication system, and limitations are not made in the embodiments of the present disclosure.

It should be understood that the terms "system" and "network" are often used interchangeably herein. The term "and/or" herein is only an association relationship for describing associated objects, and indicates that three relationships may exist. For example, "A and/or B" may represent three cases: A exists alone, both A and B exist, and B exists alone. In addition, the character "/" herein generally represents that associated objects before and after this character are in an "or" relationship.

It should be understood that the term "indicate/indicated/indicating/indication" mentioned in the embodiments of the present disclosure may represent a direct indication, an indirect indication, or an indication of an association relationship. For example, A indicating B may represent that A directly indicates B, for example, B may be acquired through A; alternatively, A indicating B may represent that A indirectly indicates B, for example, A indicates C, and B may be acquired through C; alternatively, A indicating B may represent that there is an association relationship between A and B.

In the description of the embodiments of the present disclosure, the term "correspond/corresponding/correspondence" may represent a direct or indirect correspondence between two items, or an association relationship between the two items, or a relationship of indicating and being indicated, a relationship of configuring and being configured, or the like.

To facilitate understanding of the technical solutions in the embodiments of the present disclosure, the related art of the embodiments of the present disclosure are described below. The following related art may be, as an optional solution, combined with the technical solutions in the embodiments of the present disclosure in any way, and they all belong to the protection scope of the embodiments of the present disclosure.

### 1. Wireless communication solution schemes based on AI

Solution schemes based on AI are increasingly used in wireless communication systems. For example, the following schemes may be implemented relying on artificial intelligence: a channel-state information (CSI) feedback problem, as illustrated in FIG. 2a, compression and feedback of the CSI information based on AI being achieved by introducing an AI encoder and an AI decoder; a channel estimation problem, as illustrated in FIG. 2b, an high-performance estimation of a given channel being achieved by an AI channel estimator; a positioning problem, as illustrated in FIG. 2c, a high-accuracy positioning result being obtained by a positioning algorithm based on AI and relying on positioning channel information; and a beam management problem, as illustrated in FIG. 2d, by a beam management algorithm based on AI, and according to known beam information, preferred or more refined beam information being obtained, or a prediction of beam information at a future time being obtained.

### 2. Performance evaluation methods for AI/machine learning (ML) schemes

Performance evaluations of AI/ML schemes are mainly defined based on inference performances of AI/ML schemes. For example, for a CSI compression and recovery scheme, CSI recovery accuracy that may be obtained by a specific AI/ML scheme under a specific compressed feedback bits condition may be used as a performance evaluation metric of the scheme. For example, a difference between ideal CSI information and CSI information obtained by compression and recovery, or between CSI information to be compressed and the CSI information obtained by compression and recovery is used. For a CSI prediction scheme, similar to the CSI compression and recovery scheme, CSI prediction accuracy that may be obtained by a specific AI/ML scheme may be used as a performance evaluation metric of the scheme. For example, a difference between ideal CSI information and CSI information obtained by prediction, or between target CSI information and the CSI information obtained by prediction is used.

The wireless communication solution schemes based on AI also need to consider, in practical applications, a handling scheme of these solution schemes for performance assurance issues.

For example, for the CSI feedback problem, in a practical system, the performances of the CSI compression, recovery, or CSI prediction schemes based on AI/ML are often different in different scenarios, different data, different inputs, and different usage conditions. Therefore, it is necessary to perform monitoring on the performances of the CSI compression, recovery, or prediction schemes based on AI/ML. In a case where the above schemes work well and may achieve relatively high compression and recovery performances or relatively accurate prediction performances, the above schemes should continue to be used. However, if the above schemes predict that it will be unable to, or have not been able to provide effective CSI compression and recovery performances, or relatively accurate prediction performances, the above schemes should no longer be used.

For some other examples, such as beam management based on AI, beam prediction based on time domain, or beam prediction based on spatial domain, there is a need for the above performance monitoring of a positioning scheme based on AI/ML, channel estimation based on AI/ML, an encoding and decoding scheme, and the like.

However, it should be noted that for schemes based on AI/ML, such as the CSI compression and recovery scheme based on AI/ML, or prediction scheme based on AI/ML, and other solution schemes based on AI/ML, their performances will be influenced by scenarios, data, and application conditions. Moreover, the influence has fluctuations, disturbances, irregular changes, and other problems. In practical application systems, if the AI/ML scheme is determined to be failed due to temporary performance degradation, it is easy to introduce an unnecessary determination on the failure of the AI/ML scheme and an unnecessary scheme switching, resulting in unnecessary additional processes and signaling overhead such as updates and reconfigurations of models and schemes. For example, if a CSI compression and recovery scheme is restored to normal use after being briefly ineffective, there is no need to determine that the scheme has failed and then trigger a new alternative scheme; nor is there any need to determine that the scheme has failed, then trigger a new alternative scheme, and then replace the new scheme back to the scheme.

In summary, when AI/ML-related schemes, such as CSI compression, recovery, and prediction schemes based on AI/ML, are used, for how to handle performance monitoring of the schemes, timely discover problems of performance degradation and unavailability of the schemes, and not introduce unnecessary scheme failure determination and unnecessary scheme switching, updating and fallback operations, the embodiments of the present disclosure may provide a scheme that can be applied in a wireless communication system, and may also consider a case of UE triggering and a case of network triggering.

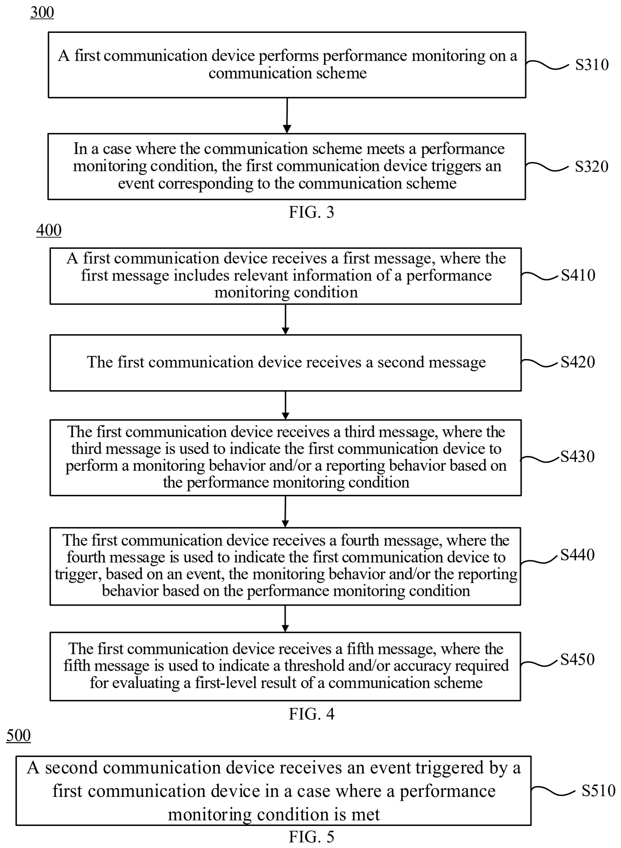

FIG. 3 is a schematic flowchart of a monitoring method 300 of a communication scheme in accordance with an embodiment of the present disclosure. The method may optionally be applied to the system illustrated in FIG. 1, but is not limited thereto. The method includes at least part of the following contents.

In S310, a first communication device performs performance monitoring on the communication scheme.

In S320, in a case where the communication scheme meets a performance monitoring condition, the first communication device triggers an event corresponding to the communication scheme.

In an implementation, the first communication device is a terminal device.

In an implementation, the first communication device is a physical layer or an MAC layer of a network device. In the embodiments of the present disclosure, the first communication device may be a terminal device, or may be a network device such as a physical layer or a media access control (MAC) layer of the network device. The first communication device performs the performance monitoring on the communication scheme, which may include: after using the communication scheme or assuming that the communication scheme is used, monitoring at least one of the following performances of the first communication device: spectrum efficiency, throughput, block error rate, square of generalized cosine similarity (SGCS), generalized cosine similarity (GCS), mean square error (MSE) or normalized mean square error (NMSE), positioning accuracy, beam prediction accuracy, beam selection accuracy, and computing power.

In some examples, if the first communication device is a terminal device and a second communication device is a network device, the terminal device triggers the event corresponding to the communication scheme, which may include: the terminal device transmits indication information related to the performances of the communication scheme to the network device. In some examples, if the first communication device is a physical layer or an MAC layer of the network device, and the second communication device is a higher layer of the network device, the physical layer or MAC layer of the network device triggers the event corresponding to the communication scheme, which may include: the physical layer or MAC layer of the network device transmits indication information related to the performances of the communication scheme to the higher layer of the network device.

In an implementation, the communication scheme includes a communication scheme based on artificial intelligence (AI) and/or based on machine learning (ML).

In an implementation, the communication scheme includes at least one of the following:
a channel state information (CSI) compression scheme based on AI and/or ML;
a CSI recovery scheme based on AI and/or ML;
an AI and/or ML scheme for processing CSI prediction;
an AI and/or ML scheme for processing beam management;
an AI and/or ML scheme for processing beam selection;
an AI and/or ML scheme for processing beam prediction; or
an AI and/or ML scheme for processing positioning.

For example, if the communication scheme is the CSI compression scheme based on AI and/or ML, SGCS, GCS, MSE or NMSE between input information and output information of the communication scheme may be monitored.

For another example, if the communication scheme is the CSI recovery scheme based on AI and/or ML, SGCS, GCS, MSE or NMSE between predicted CSI information and target CSI information of the communication scheme may be monitored.

For another example, if the communication scheme is the AI and/or ML scheme for processing beam prediction management, a predicted beam obtained from an output result of the communication scheme may be monitored.

For another example, if the communication scheme is the AI and/or ML scheme for processing beam selection, a selected beam obtained from the output result of the communication scheme may be monitored.

For another example, if the communication scheme is the AI and/or ML scheme for processing positioning, positioning accuracy obtained from the output result of the communication scheme may be monitored.

In an implementation, a case where the communication scheme meets the performance monitoring condition includes:
performing performance monitoring on the communication scheme for M times to obtain N first-level results of the communication scheme; and
obtaining a second-level result of the communication scheme based on the N first-level results of the communication scheme;
where M is greater than or equal to 1; N is greater than or equal to 1, and N is less than or equal to M.

In the embodiments of the present disclosure, a first-level result may also be referred to as a second-degree result or a first-grade result, etc. The first-level result may include a result of performing performance monitoring on any of the above communication schemes for a single time. Specific examples of the first-level result may be found in the relevant description below. The second-level result may include a total result after performing performance monitoring on the communication scheme for M times. If M is equal to 1, the first-level result of monitoring for a single may be used as the second-level result. If M is not equal to 1, it is possible to obtain N first-level results of the communication scheme. If N is equal to M, the total second-level result may be obtained based on M first-level results. If N is less than M, the total second-level result may be obtained based on N first-level results. The N first-level results may be discrete N first-level results or consecutive N first-level results.

In the embodiments of the present disclosure, the performance monitoring condition may be associated with the first-level result and the second level result. For example, if the performance monitoring condition is a first condition, the first-level result may be a first performance (e.g., a single performance being relatively poor), and the second-level result may be that the total performance is poor. For another example, if the performance monitoring condition is a second condition, the first-level result may be a second performance (e.g., a single performance being relatively good), and the second-level result may be that the total performance is good. Specific examples of the first condition and the second condition may be found in the following related descriptions.

In an implementation, a case of performing performance monitoring on the communication scheme for M times to obtain the N first-level results of the communication scheme includes at least one of the following:
performing the performance monitoring on the communication scheme for a single time to obtain a single first-level result of the communication scheme;
performing the performance monitoring on the communication scheme for M times to obtain M first-level results;
performing the performance monitoring on the communication scheme for M times to obtain N or consecutive N first-level results;
performing the performance monitoring on the communication scheme for M times within one or more first windows to obtain the M first-level results; or
performing the performance monitoring on the communication scheme for M times within one or more first windows to obtain the N or consecutive N first-level results;
where M is greater than 1, and N is less than M.

For example, if the performance monitoring is performed on the communication scheme for 10 times to obtain 10 first-level results showing that the single performance is relatively poor, then the second-level result of the communication scheme is that the total performance is poor.

For another example, if the performance monitoring is performed on the communication scheme for 10 times to obtain 6 or consecutive six first-level results showing that the single performance is relatively poor, then the second-level result of the communication scheme is that the total performance is poor.

For another example, if the performance monitoring is performed on the communication scheme for 5 times within a first window (e.g., within 10 minutes) to obtain 5 first-level results showing that the single performance is relatively good, then the second-level result of the communication scheme is that the total performance is good.

For another example, if the performance monitoring is performed on the communication scheme for 8 times within multiple first windows (e.g., within 30 minutes) to obtain 3 or consecutive 3 first-level results showing that the single performance is relatively good, then the second-level result of the communication scheme is that the total performance is good.

FIG. 4 is a schematic flowchart of another monitoring method 400 of a communication scheme in accordance with an embodiment of the present disclosure. The method may optionally be applied to the system illustrated in FIG. 1, but is not limited thereto. The method may include one or more features of the above method embodiments, and the method further includes at least part of the following contents.

In S410, a first communication device receives a first message, where the first message includes relevant information of the performance monitoring condition.

In the embodiments of the present disclosure, if the first communication device is a terminal device, the terminal device may receive the first message from the network device. Then, based on the relevant information of the performance monitoring condition in the first message, the performance monitoring is performed on the communication scheme. If the first communication device is a physical layer or an MAC layer of a network device, the physical layer or the MAC layer of the network device may directly obtain the relevant information of the performance monitoring condition in the network device.

In an implementation, the relevant information of the performance monitoring condition includes at least one of the following: a value of M of performing the performance monitoring on the communication scheme for M times by the first communication device, an interval time of the monitoring for M times, a value of N of the N first-level results of the performance monitoring for M times, a period of first window(s) of the performance monitoring for M times, a length of the first window(s), or the number of the first window(s). For example, if M is 10 and N is 3, after monitoring the communication scheme for 10 times, if 3 or consecutive 3 first-level results show relatively poor performance, the total second-level result may be determined as poor performance. For another example, if the length of the first window is 5 minutes, the communication scheme may be monitored for M times within 5 minutes. If the number of the first windows is 3, the communication scheme may be monitored for M times within each of the 3 windows.

In an implementation, the performance monitoring condition includes a first condition, and the first condition is used for triggering a first event. For example, the first condition may be a condition for determining whether the performance of the communication scheme is poor, and the first event is triggered if the second-level result of the communication scheme is determined as that the performance is poor. The first event may be indication information corresponding to the poor performance result. For example, the first event may be used to indicate at least one of the following: the performance of the communication scheme being unstable, the communication scheme being not recommended for use, the communication scheme being unusable, the performance of the first metric associated with the communication scheme being unstable, the performance of the first metric not meeting the standard, or the communication scheme being wrong.

In an implementation, the performance monitoring condition further includes a second condition, and the second condition is used for triggering a second event. For example, the second condition may be a condition for determining whether the performance of the communication scheme is good, and the second event is triggered if the second-level result of the communication scheme is determined as that the performance is good. The second event may be indication information corresponding to the good performance result. For example, the second event may be used to indicate at least one of the following: the performance of the communication scheme being stable, the communication scheme being recommended for use, the communication scheme being usable, the performance of the first metric associated with the communication scheme being stable, the performance of the first metric meeting the standard, or the communication scheme working.

The examples of the first condition and the second condition mentioned above may also be interchangeable. For example, the first condition is a condition for determining whether the performance of the communication scheme is good, and the second condition is a condition for determining whether the performance of the communication scheme is poor. The first condition and/or the second condition may also be other determination metrics, which may be flexibly set according to the actual requirements of the communication scheme.

In an implementation, the second condition is different from the first condition, the first-level result corresponding to the first condition is the first performance, the first-level result corresponding to the second condition is the second performance, and the first performance is different from the second performance.

For example, the first performance is a relatively poor performance, and meeting the first condition may include at least one of the following:
performing the performance monitoring on the communication scheme for a single time, and determining that the performance of the communication scheme is relatively poor;
performing the monitoring on the communication scheme for multiple times, and determining that the performance of the communication scheme is relatively poor for all times;
performing the monitoring on the communication scheme for consecutive M times, and determining that the performance of the communication scheme is relatively poor for N times or consecutive N times, where N is less than M.
performing the monitoring on the communication scheme for multiple times within one or more first windows, and determining that the performance of the communication scheme is relatively poor for all times; or
performing the monitoring on the communication scheme for M times within one or more first windows, and determining that the performance of the communication scheme is relatively poor for cumulative N times or consecutive N times, where N is less than M.

For another example, the second performance is a relatively good performance, and meeting the second condition may include at least one of the following:
determining the performance of the communication scheme for a single time, and determining that the performance of the communication scheme is relatively good;
determining the communication scheme for multiple times, and determining that the performance of the communication scheme is relatively good for all times;
determining the communication scheme for consecutive M times, and determining that the performance of the communication scheme is relatively good for N times or consecutive N times, where N is less than M;
determining the communication scheme for multiple times within one or more first windows, and determining that the performance of the communication scheme is relatively good for all times; or
determining the communication scheme for multiple times within one or more first windows, and determining that the performance of the communication scheme is relatively good for cumulative N times or consecutive N times, where N is less than M.

In an implementation, the first communication device triggering the event corresponding to the communication scheme, includes:
reporting, by the first communication device, indication information corresponding to the communication scheme;
where indication information reported in a case where the first condition is met is first indication information; and indication information reported in a case where the second condition is met is second indication information.

For example, if the second-level result obtained based on the first-level results is that the performance of the communication scheme is poor, the first condition is met, and the first communication device may report the first indication information to the second communication device.

For another example, if the second-level result obtained based on the first-level results is that the performance of the communication scheme is good, the second condition is met, and the first communication device may report the second indication information to the second communication device.

The contents of the indication information reported in a case where different conditions are met may be different, and the contents of the indication information may be flexibly set according to the requirements of the communication scheme.

In the embodiments of the present disclosure, the monitoring behavior and/or the reporting behavior mentioned above may be periodically (time-based) triggered, network-triggered, or event-triggered.

In an implementation, the monitoring behavior and/or the reporting behavior based on the performance monitoring condition is periodic.

In the embodiments of the present disclosure, the period of the monitoring behavior and/or the reporting behavior may be configured by a network or pre-configured.

In an implementation, as illustrated in FIG. 4, the method 400 further includes the following step. In S420, the first communication device receives a second message, where the second message includes at least one of the following periods:
a period of reporting an first event and/or an second event; or
a period of transmitting first indication information and/or transmitting second indication information; where the first indication information is information transmitted for reporting the first event, and the second indication information is information transmitted for reporting the second event.

In the embodiments of the present disclosure, a first communication device (e.g., a terminal device) may receive the second message including a period of the monitoring behavior and/or the reporting behavior from a network device.

For example, the performance of the first communication device, after using the communication scheme or assuming the communication scheme is used, is monitored within the first period. The first indication information is reported in a case where the first condition is met. For another example, the performance of the first communication device, after using the communication scheme or assuming the communication scheme is used, is monitored within the first period. In a case where the second condition is met, the second indication information is reported according to a second period.

In an implementation, the monitoring behavior and/or the reporting behavior based on the performance monitoring condition is network-triggered. For example, the network device may transmit a third message to the terminal device to trigger the terminal device to perform the monitoring behavior and/or the reporting behavior.

In an implementation, as illustrated in FIG. 4, the method 400 further includes the following step. In S430, the first communication device receives a third message, where the third message is used to indicate the first communication device to perform the monitoring behavior and/or the reporting behavior based on the performance monitoring condition.

In an implementation, the third message is used to indicate at least one of the following:
an event type that need to be reported in the communication scheme;
one or more of a value of M, an interval time of monitoring for M times, a value of N, a period of first window(s), a length of the first window(s), or the number of the first window(s);
one or more of a period, a time domain location, or the reporting number of the monitoring behavior and/or the reporting behavior based on the performance monitoring condition;
a performance monitoring condition; or
a reporting mode.

For example, the event type that need to be reported may include reporting only the first event, reporting only the second event, reporting both the first event and the second event, or the like.

For another example, the performance monitoring condition in the third message may be that the monitoring is performed for 10 times and the performance obtained for 10 times is relatively poor, or that the monitoring is performed for 10 times and the performance obtained for consecutive 3 times is relatively good.

In an implementation, the monitoring behavior and/or the reporting behavior based on the performance monitoring condition is event-triggered.

In an implementation, the event-triggered mode is agreed upon by a protocol. In addition, an event for triggering the performance monitoring may be preset, or an event for triggering the performance monitoring may be configured by the network, thereby triggering the monitoring behavior and/or the reporting behavior of the first communication device based on the event.

In an implementation, the event-triggered mode includes at least one of the following:
triggering the monitoring behavior and/or the reporting behavior based on the performance monitoring condition if a parameter value corresponding to a first-level result of the communication scheme is less than a triggering threshold; or
stopping the monitoring behavior and/or the reporting behavior based on the performance monitoring condition if the parameter value corresponding to the first-level result of the communication scheme is greater than a recovery threshold.

In an implementation, as illustrated in FIG. 4, the method 400 further includes the following step. In S440, the first communication device receives a fourth message, where the fourth message is used to indicate the first communication device to trigger, based on an event, the monitoring behavior and/or the reporting behavior based on the performance monitoring condition.

In an implementation, the fourth message is used to indicate at least one of the following:
a triggering threshold;
a recovery threshold;
an event type that need to be reported in the communication scheme;
one or more of a value of M, an interval time of monitoring for M times, a value of N, a period of first window(s), a length of the first window(s), or the number of the first window(s);
one or more of a period, a time domain location, or the reporting number of the monitoring behavior and/or the reporting behavior based on the performance monitoring condition;
an event triggering condition;
a performance monitoring condition; or
a reporting mode.

For example, the event triggering condition may be that the above-mentioned reporting is triggered if a certain performance of the communication scheme is less than a specific triggering threshold, and/or the above-mentioned reporting is stopped if the performance of the communication scheme is greater than a specific recovery threshold. For another example, the reporting mode may include reporting the message type used.

For example, the first communication device is a physical layer or an MAC layer of a network device, and the above-mentioned event-triggered mode may be agreed upon by a protocol, but the specific triggering threshold and/or recovery threshold may be configured to the MAC layer or the physical layer by the higher layer of the network device, or configured to the physical layer by the MAC layer of the network device.

In the embodiments of the present disclosure, since there are various types of communication schemes, the modes for obtaining the first-level results of monitoring different communication schemes for a single time are different. The following lists several modes for determining the first-level results of the communication scheme.

In an implementation, the first-level result includes: after using the communication scheme or assuming that the communication scheme is used, that the first-level result of the communication scheme is a first performance if spectrum efficiency and/or throughput is less than a first threshold; or that the first-level result of the communication scheme is a second performance if the spectrum efficiency and/or the throughput is greater than a second threshold.

In an implementation, the first-level result includes: after using the communication scheme or assuming that the communication scheme is used, that the first-level result of the communication scheme is a first performance if a block error rate (BLER) is greater than a first threshold; or that the first-level result of the communication scheme is a second performance if the BLER is less than a second threshold.

For example, the first threshold of the BLER may be 1%, 2%, 5%, 10%, 20%, or 25%. Assuming that the first threshold of the BLER is 10%, if the BLER of the communication scheme is 15%, which is greater than the first threshold of the BLER, the first-level result of the communication scheme is a first performance (e.g., a relatively poor performance). The second threshold of the BLER may be 1%, 2%, 5%, 10%, 20%, or 25%. Assuming that the second threshold of the BLER is 5%, if the BLER of the communication scheme is 3%, which is less than the second threshold of the BLER, the first-level result of the communication scheme is a second performance (e.g., a relatively good performance).

In an implementation, the first-level result includes: after using the communication scheme or assuming that the communication scheme is used, a result of at least one of square of generalized cosine similarity (SGCS), generalized cosine similarity (GCS), mean square error (MSE) or normalized mean square error (NMSE).

In an implementation, in a case where the communication scheme is a CSI compression and/or recovery scheme, the first-level result includes at least one of the following:
that a performance of the CSI compression and/or recovery scheme is a first performance if a SGCS or a GCS between input information and output information of the communication scheme is less than a first threshold; or that the performance of the CSI compression and/or recovery scheme is a second performance if the SGCS or the GCS between the input information and the output information of the communication scheme is greater than a second threshold;
that the performance of the CSI compression and/or recovery scheme is a first performance if an MSE or an NMSE between the input information and the output information of the communication scheme is greater than a first threshold; or that the performance of the CSI compression and/or recovery scheme is a second performance if the MSE or the NMSE between the input information and the output information of the communication scheme is less than a second threshold;
that the performance of the CSI compression and/or recovery scheme is a first performance if a probability that the SGCS between the input information and the output information of the communication scheme is greater than a target SGCS, or a probability that the GCS between the input information and the output information of the communication scheme is greater than a target GCS is less than a first threshold; or that the performance of the CSI compression and/or recovery scheme is a second performance if the probability that the SGCS between the input information and the output information of the communication scheme is greater than the target SGCS, or the probability that the GCS between the input information and the output information of the communication scheme is greater than the target GCS is greater than a second threshold; or
that the performance of the CSI compression and/or recovery scheme is a first performance if a probability that the MSE between the input information and the output information of the communication scheme is less than a target MSE, or a probability that the NMSE between the input information and the output information of the communication scheme is less than a target NMSE is greater than a first threshold; or that the performance of the CSI compression and/or recovery scheme is a second performance if the probability that the MSE between the input information and the output information of the communication scheme is less than the target MSE, or the probability that the NMSE between the input information and the output information of the communication scheme is less than the target NMSE is less than a second threshold.

For example, the first threshold of the SGCS may be 0.99, 0.98, 0.95, 0.9, 0.85, 0.8, 0.75, 0.7, 0.65, or 0.6. Assuming that the first threshold of the SGCS is 0.7, if the SGCS between the input information and the output information of the CSI compression scheme is 0.6, which is less than the first threshold of the SGCS, then the first-level result of the CSI compression scheme is the first performance (e.g., a relatively poor performance). The second threshold of the SGCS may be 0.99, 0.98, 0.95, 0.9, 0.85, 0.8, 0.75, 0.7, 0.65, or 0.6. Assuming that the second threshold of the SGCS is 0.8, if the SGCS between the input information and the output information of the CSI compression scheme is 0.9, which is greater than the second threshold of the SGCS, then the first-level result of the CSI compression scheme is the second performance (e.g., a relatively good performance).

In an implementation, in a case where the communication scheme is a CSI prediction scheme, the first-level result includes at least one of the following:
that a performance of the CSI prediction scheme is a first performance if a SGCS or a GCS between predicted CSI information of the communication scheme and target CSI information is less than a first threshold; or that the performance of the CSI prediction scheme is a second performance if the SGCS or the GCS between the predicted CSI information of the communication scheme and the target CSI information is greater than a second threshold;
that the performance of the CSI prediction scheme is a first performance if an MSE or an NMSE between the predicted CSI information of the communication scheme and the target CSI information is less than a first threshold; or that the performance of the CSI prediction scheme is a second performance if the SGCS or the GCS between the predicted CSI information of the communication scheme and the target CSI information is greater than a second threshold;
that the performance of the CSI prediction scheme is a first performance if a probability that the SGCS between the predicted CSI information of the communication scheme and the target CSI information is greater than a target SGCS, or a probability that the GCS between the predicted CSI information of the communication scheme and the target CSI information is greater than a target GCS is less than a first threshold; or that the performance of the CSI prediction scheme is a second performance if the probability that the SGCS between the predicted CSI information of the communication scheme and the target CSI information is greater than the target SGCS, or the probability that the GCS between the predicted CSI information of the communication scheme and the target CSI information is greater than the target GCS is greater than a second threshold; or
that the performance of the CSI prediction scheme is a first performance if a probability that the MSE between the predicted CSI information of the communication scheme and the target CSI information is less than a target MSE, or a probability that an NMSE between the predicted CSI information of the communication scheme and the target CSI information is less than a target NMSE is less than a first threshold; or that the performance of the CSI prediction scheme is a second performance if the probability that the MSE between the predicted CSI information of the communication scheme and the target CSI information is less than the target MSE, or the probability that the NMSE between the predicted CSI information of the communication scheme and the target CSI information is less than the target NMSE is greater than a second threshold.

For example, the first threshold of the probability of the target SGCS may be 0.99, 0.98, 0.95, 0.9, 0.85, 0.8, 0.75, 0.7, 0.65, or 0.6. Assuming that the first threshold of the probability of the target SGCS is 0.6, if the probability of the target SGCS between the predicted CSI information of the CSI prediction scheme and the target CSI information is 0.5, which is less than the first threshold of the probability of the target SGCS, the first-level result of the CSI prediction scheme is the first performance (e.g., a relatively poor performance). The second threshold of the probability of the target SGCS may be 0.99, 0.98, 0.95, 0.9, 0.85, 0.8, 0.75, 0.7, 0.65, or 0.6. Assuming that the second threshold of the probability of the target SGCS is 0.7, if the probability of the target SGCS between the predicted CSI information of the CSI prediction scheme and the target CSI information is 0.8, which is greater than the second threshold of the probability of the target SGCS, the first-level result of the CSI prediction scheme is the second performance (e.g., a relatively good performance).

In an implementation, the first-level result includes: after using the communication scheme or assuming that the communication scheme is used, at least one of the following results based on positioning accuracy:
that a performance of a positioning scheme based on AI and/or ML (also referred to as an AI and/or ML scheme for processing positioning) is a first performance if positioning accuracy obtained from an output result of the communication scheme is less than a first threshold; or that the performance of the positioning scheme based on AI and/or ML is a second performance if the positioning accuracy from the output result of the communication scheme is greater than a second threshold; or
that the performance of the positioning scheme based on AI and/or ML is a first performance if a probability that the positioning accuracy obtained from the output result of the communication scheme is greater than a target accuracy threshold is less than a first threshold; or that the performance of the positioning scheme based on AI and/or ML is a second performance if the probability that the positioning accuracy from the output result of the communication scheme is greater than the target accuracy threshold is greater than a second threshold.

For example, the target accuracy may be 2 meters, 1 meter, 0.5 meters, 0.2 meters, 0.1 meters, 0.05 meters, or 0.01 meters. The first threshold of the probability may be 0.99, 0.98, 0.95, 0.9, 0.85, 0.8, 0.75, 0.7, 0.65, or 0.6. Assuming that the first threshold of the probability is 0.75, if the probability that the positioning accuracy of the positioning scheme is greater than the target accuracy threshold is 0.6, which is less than the first threshold of the probability, the first-level result of the positioning scheme is a first performance (e.g., a relatively poor performance). The second threshold of the probability may be 0.99, 0.98, 0.95, 0.9, 0.85, 0.8, 0.75, 0.7, 0.65, or 0.6. Assuming that the second threshold of the probability is 0.8, if the probability that the positioning accuracy of the positioning scheme is greater than the target accuracy threshold is 0.85, which is greater than the second threshold of the positioning accuracy, the first-level result of the positioning scheme is a second performance (e.g., a relatively good performance).

In an implementation, the first-level result includes: after using the communication scheme or assuming that the communication scheme is used, at least one of the following results based on beam prediction accuracy:
that a predicted beam obtained from an output result of the communication scheme is a target beam or includes the target beam, or is not the target beam or does not include the target beam;
that a performance of a beam prediction scheme (e.g., an AI and/or ML scheme for processing beam prediction) is a first performance if at least one of a reference signal received power (RSRP) difference, a reference signal received quality (RSRQ) difference, a signal interference noise ratio (SINR) difference, or a beam angle difference between the predicted beam obtained from the output result of the communication scheme and the target beam is greater than a first threshold; or that the performance of the beam prediction scheme is a second performance if at least one of the RSRP difference, the RSRQ difference, the SINR difference, or the beam angle difference between the predicted beam obtained from the output result of the communication scheme and the target beam is less than a second threshold;
that the performance of the beam prediction scheme is a first performance if the predicted beam obtained from the output result of the communication scheme is not the target beam or does not include the target beam; or that the performance of the beam prediction scheme is a second performance if the predicted beam obtained from the output result of the communication scheme is the target beam or includes the target beam; or
that the performance of the beam prediction scheme is a first performance if a probability that the predicted beam obtained from the output result of the communication scheme is the target beam or includes the target beam is less than a first threshold; or that the performance of the beam prediction scheme is a second performance if the probability that the predicted beam obtained from the output result of the communication scheme is the target beam or includes the target beam is greater than a second threshold.

In an implementation, the first-level result includes: after using the communication scheme or assuming that the communication scheme is used, at least one of the following results based on beam selection accuracy:
that a selected beam obtained from an output result of the communication scheme is or includes a target beam, or is not the target beam or does not include the target beam;
that a performance of a beam selection scheme (e.g., an AI and/or ML scheme for processing beam selection) is a first performance if at least one of an RSRP difference, an RSRQ difference, an SINR difference, or a beam angle difference between the selected beam obtained from the output result of the communication scheme and the target beam is greater than a first threshold; or that the performance of the beam selection scheme is a second performance if at least one of the RSRP difference, the RSRQ difference, the SINR difference, or the beam angle difference between the selected beam obtained from the output result of the communication scheme and the target beam is less than a second threshold;
that the performance of the beam prediction scheme is a first performance if the selected beam obtained from the output result of the communication scheme is not the target beam or does not include the target beam; or that the performance of the beam prediction scheme is a second performance if the selected beam obtained from the output result of the communication scheme is the target beam or includes the target beam; or
that the performance of the beam selection scheme is a first performance if a probability that the selected beam obtained from the output result of the communication scheme is the target beam or includes the target beam is less than a first threshold; or that the performance of the beam prediction scheme is a second performance if the probability that the selected beam obtained from the output result of the communication scheme is the target beam or includes the target beam is greater than a second threshold.

In an implementation, the first-level result includes: that a performance of the communication scheme is a first performance if a difference between information data input into the communication scheme and expected information data of the communication scheme is greater than a first threshold; or that the performance of the communication scheme is a second performance if the difference between the information data input into the communication scheme and the expected information data of the communication scheme is less than a second threshold.

In an implementation, the first-level result includes: after using the communication scheme or assuming that the communication scheme is used, that the performance of the communication scheme is a first performance if computing power required is insufficient; or that the performance of the communication scheme is a second performance if the computing power required is sufficient.

In an implementation, as illustrated in FIG. 4, the method 400 further includes the following step. In S450, the first communication device receives a fifth message, where the fifth message is used to indicate a threshold and/or accuracy required for evaluating the first-level result of the communication scheme.

In the embodiments of the present disclosure, the above-mentioned different communication schemes may respectively set their own first thresholds and/or second thresholds. The same communication scheme may have the same or different first thresholds and second thresholds. The first thresholds of different communication schemes are generally different, but the same is not excluded. The second thresholds of different schemes are generally different, but the same is not excluded.

In an implementation, a type of the message includes at least one of the following:
a medium access control control element (MAC CE), a radio resource control (RRC) signaling, an RRC reconfiguration message, a system broadcast, a master information block (MIB), a system information block (SIB), or an SIB1.

The embodiments of the present disclosure reasonably monitors the performance of the communication scheme through an event triggered by the first communication device in a case where the performance monitoring condition is met, so as to facilitate good performance guarantee of the communication scheme. Through multiple evaluations and comprehensive determination, it is expected that a stable AI/ML performance monitoring result may be obtained. For example, the embodiments of the present disclosure may reduce AI/ML performance fluctuations caused by sample data, temporary changes of the environment, temporary non-satisfaction of application conditions, and the like. For another example, the embodiments of the present disclosure may reduce unnecessary determinations of failures in using AI/ML schemes and unnecessary scheme switching. For another example, the embodiments of the present disclosure may reduce unnecessary additional processes and signaling overhead such as updating and reconfiguration of models and schemes.

FIG. 5 is a schematic flowchart of a monitoring method 500 of a communication scheme in accordance with an embodiment of the present disclosure. The method may optionally be applied to the system illustrated in FIG. 1, but is not limited thereto. The method includes at least part of the following contents.

In S510, a second communication device receives an event triggered by a first communication device in a case where a performance monitoring condition is met.

In an implementation, the communication scheme includes a communication scheme based on artificial intelligence (AI) and/or based on machine learning (ML).

In an implementation, the communication scheme includes at least one of the following:
a channel state information (CSI) compression scheme based on AI and/or ML;
a CSI recovery scheme based on AI and/or ML;
an AI and/or ML scheme for processing CSI prediction;
an AI and/or ML scheme for processing beam management;
an AI and/or ML scheme for processing beam selection;
an AI and/or ML scheme for processing beam prediction; or
an AI and/or ML scheme for processing positioning.

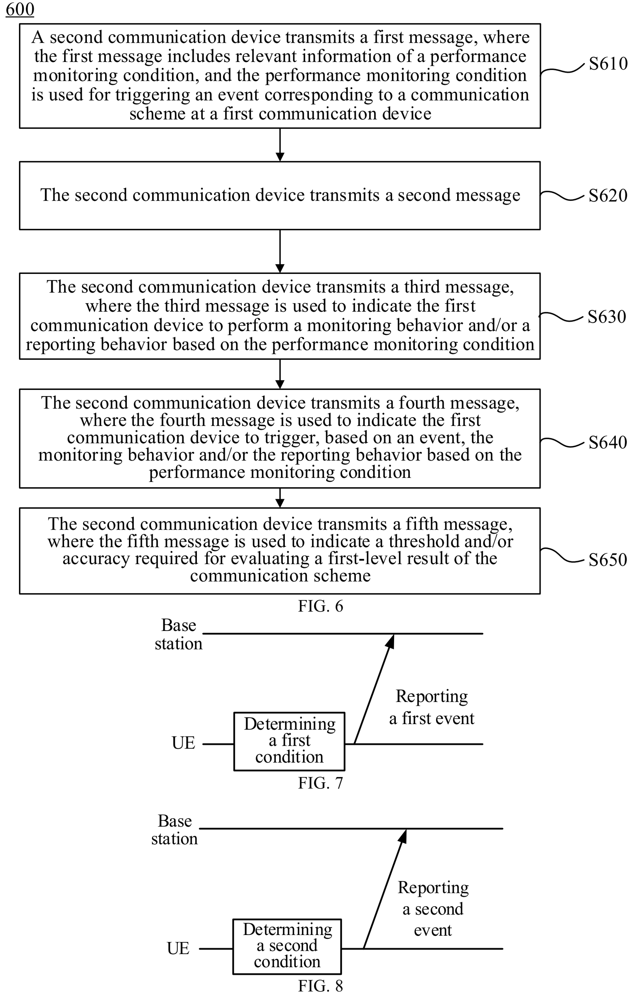

FIG. 6 is a schematic flowchart of another monitoring method 600 of a communication scheme in accordance with an embodiment of the present disclosure. The method may optionally be applied to the system illustrated in FIG. 1, but is not limited thereto. The method may include one or more features of the above method embodiments, and the method further includes at least part of the following contents.

In S610, a second communication device transmits a first message, where the first message includes relevant information of the performance monitoring condition, and the performance monitoring condition is used for triggering an event corresponding to a communication scheme at a first communication device.

In an implementation, the relevant information of the performance monitoring condition includes at least one of the following:
a value of M of performing performance monitoring on the communication scheme for M times by the first communication device, an interval time of the monitoring for M times, a value of N of N first-level results of the performance monitoring for M times, a period of first window(s) of the performance monitoring for M times, a length of the first window(s), or the number of the first window(s).

In an implementation, the performance monitoring condition includes a first condition, and the first condition is used for triggering a first event.

In an implementation, the performance monitoring condition further includes a second condition, and the second condition is used for triggering a second event.

In an implementation, the second condition is different from the first condition, a first-level result corresponding to the first condition is a first performance, a first-level result corresponding to the second condition is a second performance, and the first performance is different from the second performance.

In an implementation, the second communication device receiving the event triggered by the first communication device in a case where the performance monitoring condition is met, includes:
receiving, by the second communication device, indication information corresponding to the communication scheme reported by the first communication device;
where indication information reported in a case where the first condition is met is first indication information; and indication information reported in a case where the second condition is met is second indication information.

In an implementation, a monitoring behavior and/or a reporting behavior based on the performance monitoring condition is periodic.

In an implementation, as illustrated in FIG. 6, the method 600 further includes the following step. In S620, the second communication device transmits a second message, where the second message includes at least one of the following periods:
a period of reporting an first event and/or an second event; or
a period of transmitting first indication information and/or transmitting second indication information; where the first indication information is information transmitted for reporting the first event, and the second indication information is information transmitted for reporting the second event.

In an implementation, the monitoring behavior and/or the reporting behavior based on the performance monitoring condition is network-triggered.

In an implementation, as illustrated in FIG. 6, the method 600 further includes the following step. In S630, the second communication device transmits a third message, where the third message is used to indicate the first communication device to perform the monitoring behavior and/or the reporting behavior based on the performance monitoring condition.

In an implementation, the third message is used to indicate at least one of the following:
an event type that need to be reported in the communication scheme;
one or more of a value of M, an interval time of monitoring for M times, a value of N, a period of first window(s), a length of the first window(s), or the number of the first window(s);
one or more of a period, a time domain location, or the reporting number of the monitoring behavior and/or the reporting behavior based on the performance monitoring condition;
a performance monitoring condition; or
a reporting mode.

In an implementation, the monitoring behavior and/or the reporting behavior based on the performance monitoring condition is event-triggered.

In an implementation, the event-triggered mode includes at least one of the following:
triggering the monitoring behavior and/or the reporting behavior based on the performance monitoring condition if a parameter value corresponding to a first-level result of the communication scheme is less than a triggering threshold; or
stopping the monitoring behavior and/or the reporting behavior based on the performance monitoring condition if the parameter value corresponding to the first-level result of the communication scheme is greater than a recovery threshold.

In an implementation, the event-triggered mode is agreed upon by a protocol.

In an implementation, as illustrated in FIG. 6, the method 600 further includes the following step. In S640, the second communication device transmits a fourth message, where the fourth message is used to indicate the first communication device to trigger, based on an event, the monitoring behavior and/or the reporting behavior based on the performance monitoring condition.

In an implementation, the fourth message is used to indicate at least one of the following:
a triggering threshold;
a recovery threshold;
an event type that need to be reported in the communication scheme;
one or more of a value of M, an interval time of monitoring for M times, a value of N, a period of first window(s), a length of the first window(s), or the number of the first window(s);
one or more of a period, a time domain location, or the reporting number of the monitoring behavior and/or the reporting behavior based on the performance monitoring condition;
an event triggering condition;
a performance monitoring condition; or
a reporting mode.

In an implementation, as illustrated in FIG. 6, the method 600 further includes the following step. In S650, the second communication device transmits a fifth message, where the fifth message is used to indicate a threshold and/or accuracy required for evaluating the first-level result of the communication scheme.

In an implementation, the type of the message includes at least one of the following:
an MAC CE, an RRC signaling, an RRC reconfiguration message, a system broadcast, an MIB, an SIB, or an SIB1.

In an implementation, the first communication device is a terminal device, and the second communication device is a network device.

In an implementation, the first communication device is a physical layer or an MAC layer of a network device, and the second communication device is a higher layer of the network device.

Specific examples of the second communication device performing the methods 500 and 600 in the embodiments may be found in the relevant descriptions about the second communication device in the above methods 200 and 300, and details are not repeated here for the sake of brevity.

**Example** 1: A method for performing performance monitoring and obtaining stability monitoring results mainly on the terminal device (UE) side is provided. The example may include basic performance evaluation and stability evaluation. If the basic performance evaluation is referred to as Level 1 evaluation, the stability evaluation may be referred to as Level 2 evaluation. The result of the basic performance evaluation may be referred to as a first-level result or a first-degree result, and a result of the stability evaluation may be referred to as a second-level result or a second-degree result. The following will introduce stability evaluation and then basic performance evaluation. Of course, other degrees may also be used to distinguish the basic performance evaluation and the stability evaluation. For example, the basic performance evaluation is Level 0 evaluation and the stability evaluation is Level 1 evaluation.

### First. Stability evaluation phase (Level 2 evaluation):

As illustrated in FIG. 7, the UE triggers a first event by determining whether a first condition is met. The first condition is a first condition for the UE to determine that a performance of a first scheme is poor. For example, the first scheme may include any of the following: an AI/ML first scheme, an AI/ML first scheme for processing CSI compression and recovery, an AI/ML first scheme for processing CSI prediction, an AI/ML first scheme for processing beam management, and an AI/ML first scheme for processing positioning. The performance of the first scheme being poor may also be referred to as the second-degree being poor or the second-level result being poor.

The first event here may indicate a result after the first condition is met, for example, it indicates that an evaluation result of the first scheme under the first condition is a determination of the performance of the first scheme being poor (or the second-degree being poor), the first scheme being not recommended for use (or the second-degree being not recommended for use), or the first scheme being unusable (the second-degree being unusable). For example, the result indicated by the first event may be that the AI/ML scheme has an error (Error Indication), the performance of the AI/ML scheme is unstable (Unstable performance indication), the AI/ML scheme is not recommended for use, the AI/ML scheme is unusable, the performance of the first metric associated with the AI/ML scheme is unstable, or the performance of the first metric associated with the AI/ML scheme does not meet the standard.

The behavior corresponding to the first event may include that the UE transmits a first indication message to the network, where the first indication message indicates that the evaluation result of the first scheme under the first condition is a determination of the performance of the first scheme being poor (or the second-degree being poor), the first scheme being not recommended for use (or the second-degree being not recommended for use), or the first scheme being unusable (the second-degree being unusable).

For example, the UE triggers the first indication information for reporting that the performance of the AI/ML first scheme for processing CSI compression and recovery is poor (the second-degree is poor) to the network side through the result of determining the performance of the AI/ML first scheme being poor (the second-degree being poor), for example, determining the performance of the AI/ML first scheme for processing CSI compression and recovery being poor (the second-degree being poor). For example, the first indication message may indicate that the AI/ML scheme has an error (Error Indication), the performance of the AI/ML scheme is unstable (Unstable performance indication), the AI/ML scheme is not recommended for use, the AI/ML scheme is unusable, the performance of the first metric associated with the AI/ML scheme is unstable, or the performance of the first metric associated with the AI/ML scheme does not meet the standard.

(First) For example, the first condition may be one of the following conditions.
1. The performance of the first scheme is determined for a single time and it is determined that the performance of the first scheme is relatively poor.

For example, for the CSI compression and recovery scheme based on AI/ML, an effect of the CSI compression and recovery scheme is determined for one time, and it is determined that the performance of the CSI compression and recovery scheme based on AI/ML is relatively poor.

For example, the CSI compression and recovery scheme based on AI/ML may also be replaced with another scheme, such as the AI/ML first scheme for processing CSI prediction, the AI/ML first scheme for processing beam management, the AI/ML first scheme for processing beam selection, the AI/ML first scheme for processing beam prediction, and the AI/ML first scheme for processing positioning.

2. The first scheme is determined for multiple times and it is determined that the performance of the first scheme is relatively poor for all times.

For example, the performance of the CSI compression and recovery scheme based on AI/ML is determined for M (or consecutive M) times, and it is determined that the performance of the CSI compression and recovery scheme based on AI/ML is relatively poor for M times. Here, M may be a positive integer greater than or equal to 1, such as 2, 4, 5, 8, 10, 15, 16, 20, 32, 40, 50, 80, 128, 160, 200, 500, or 1000.

3. The first scheme is determined for consecutive multiple times and it is determined that the performance of the first scheme is relatively poor for multiple times.

For example, the performance of the CSI compression and recovery scheme based on AI/ML is determined for M times (or consecutive M times), and it is determined that the performance of the CSI compression and recovery scheme based on AI/ML is relatively poor for N times (or consecutive N times). Here, N is less than M, and N is a positive integer greater than or equal to 1 and less than M.

4. The first scheme is determined for multiple times within one or more first evaluation windows, and it is determined that the performance of the first scheme is relatively poor for all times.

For example, for the performance of the CSI compression and recovery scheme based on AI/ML, the first window is L milliseconds, or L time slots, or L sub-frames. Determinations are made for M times within one first window, and it is determined that the performance of the CSI compression and recovery scheme based on AI/ML is relatively poor for all M times. Within two, four or five first windows, determinations are made for M times within each window, or determinations are made for M times in total, and it is determined that the performance of the CSI compression and recovery scheme based on AI/ML is relatively poor for all M times.

5. The first scheme is determined for multiple times within the first evaluation window, and it is determined that the performance of the first scheme is relatively poor for cumulative multiple times.

For example, for the performance of the CSI compression and recovery scheme based on AI/ML, the first window is L milliseconds, or L time slots, or L sub-frames. Determinations are made for M times within one first window, and it is determined that the performance of the CSI compression and recovery scheme based on AI/ML is relatively poor for N or consecutive N times. Within two, four or five first windows, determinations are made for M times within each window, or determinations are made for M times in total, and it is determined that the performance of the CSI compression and recovery scheme based on AI/ML is relatively poor for N or consecutive N times; alternatively, it is determined that the performance of the CSI compression and recovery scheme based on AI/ML is relatively poor for N or consecutive N times within each window. In the above example, N is less than M, and N is a positive integer greater than or equal to 1 and less than M.

One or more of the value of M, the interval time of determination for M times, the value of N, the length L of the first window, the number K of the first window(s) and other information involved in the above-mentioned various first condition determination processes may be agreed upon by the protocol, or configured to the UE by the base station. For example, the network notifies to the UE through downlink control information (DCI), an MAC CE, an RRC signaling, an RRC reconfiguration message, a system broadcast, an MIB, an SIB1, an SIB, or the like. For example, the base station indicates the UE to monitor the performance of the first scheme based on AI/ML for M (which is equal to 20) times, and in a case where it is determined that the performance of the first scheme based on AI/ML is relatively poor for N (which is equal to 3) times, the first event is triggered. For another example, the base station indicates the UE to monitor the performance of the first scheme based on AI/ML for M (which is equal to 10) times within 20 time slots, and in a case where it is determined that the performance of the first scheme based on AI/ML is relatively poor for N (which is equal to 2) times, the first event is triggered. The above information such as M, N, and the length L of the first window may be notified to the UE by the network through a DCI, an MAC CE, an RRC signaling, an RRC reconfiguration message, a system broadcast, an MIB, an SIB1, an SIB, or the like.

As illustrated in FIG. 8, the UE triggers a second event by determining whether a second condition is met. The second condition is a second condition for the UE to determine whether the performance of the first scheme (such as the AI/ML first scheme, the AI/ML first scheme for processing CSI compression and recovery, the AI/ML first scheme for processing CSI prediction, the AI/ML first scheme for processing beam management, and the AI/ML first scheme for processing positioning) is good (or the second-degree is good).

The second event here may indicate a result after the second condition is met, for example, it indicates that an evaluation result of the first scheme under the second condition is a determination of the performance of the first scheme being good (or the second-degree being good), the first scheme being recommended for use (or the second-degree being recommended for use), or the first scheme being usable (the second-degree being usable). The behavior of the second event may be that the UE transmits a second indication message to the network, where the second indication message indicates that the evaluation result of the first scheme under the second condition is a determination of the performance of the first scheme being good (or the second-degree being good), the first scheme being recommended for use (or the second-degree being recommended for use), and the first scheme being usable (the second-degree being usable). For example, the second event may be that the AI/ML scheme is working (Work Indication), the performance of the AI/ML scheme is stable (Stable performance indication), the AI/ML scheme is recommended for use, the AI/ML scheme is usable, the performance of the first metric associated with the AI/ML scheme is stable, or the performance of the first metric associated with the AI/ML scheme meets the standard.

For example, the UE triggers the second indication information for reporting that the performance of the AI/ML first scheme for processing CSI compression and recovery is good (the second-degree is good) to the network side through the result of determining the performance of the AI/ML first scheme being good (the second-degree being good), for example, determining the performance of the AI/ML first scheme for processing CSI compression and recovery being good (the second-degree being good). For example, the second indication message may indicate that the AI/ML scheme is working, the performance of the AI/ML scheme is stable, the AI/ML scheme is recommended for use, the AI/ML scheme is usable, the performance of the first metric associated with the AI/ML scheme is stable, or the performance of the first metric associated with the AI/ML scheme meets the standard.

(Second) For example, the second condition may be one of the following conditions.
1. The performance of the first scheme is determined for a single time and it is determined that the performance of the first scheme is relatively good.

For example, for the CSI compression and recovery scheme based on AI/ML, an effect of the CSI compression and recovery scheme is determined for one time, and it is determined that the performance of the CSI compression and recovery scheme based on AI/ML is relatively good.

For example, the CSI compression and recovery scheme based on AI/ML may also be replaced with another scheme, such as the AI/ML first scheme for processing CSI prediction, the AI/ML first scheme for processing beam management, the AI/ML first scheme for processing beam selection, the AI/ML first scheme for processing beam prediction, and the AI/ML first scheme for processing positioning.

2. The first scheme is determined for multiple times and it is determined that the performance of the first scheme is relatively good for all times.

For example, the performance of the CSI compression and recovery scheme based on AI/ML is determined for M (or consecutive M) times, and it is determined that the performance of the CSI compression and recovery scheme based on AI/ML is relatively good for M times. Here, M may be a positive integer greater than or equal to 1, such as 2, 4, 5, 8, 10, 15, 16, 20, 32, or 40.

3. The first scheme is determined for multiple times and it is determined that the performance of the first scheme is relatively good for multiple times.

For example, the performance of the CSI compression and recovery scheme based on AI/ML is determined for M times (or consecutive M times), and it is determined that the performance of the CSI compression and recovery scheme based on AI/ML is relatively good for N times (or consecutive N times). Here, N is less than M, and N is a positive integer greater than or equal to 1 and less than M.

4. The first scheme is determined for multiple times within one or more second evaluation windows, and it is determined that the performance of the first scheme is relatively good for all times.

For example, for the performance of the CSI compression and recovery scheme based on AI/ML, the second window is L milliseconds, or L time slots, or L sub-frames. Determinations are made for M times within one second window, and it is determined that the performance of the CSI compression and recovery scheme based on AI/ML is relatively good for all M times. Within two, four or five second windows, determinations are made for M times within each window, or determinations are made for M times in total, and it is determined that the performance of the CSI compression and recovery scheme based on AI/ML is relatively good for all M times.

5. The first scheme is determined for multiple times within one or more second evaluation windows, and it is determined that the performance of the first scheme is relatively good for cumulative multiple times.

For example, for the performance of the CSI compression and recovery scheme based on AI/ML, the second window is L milliseconds, or L time slots, or L sub-frames. Determinations are made for M times within one second window, and it is determined that the performance of the CSI compression and recovery scheme based on AI/ML is relatively good for N or consecutive N times. Within two, four or five second windows, determinations are made for M times within each window, or determinations are made for M times in total, and it is determined that the performance of the CSI compression and recovery scheme based on AI/ML is relatively good for N or consecutive N times; alternatively, it is determined that the performance of the CSI compression and recovery scheme based on AI/ML is relatively good for N or consecutive N times within each window.

One or more of the value of M, the interval time of determination for M times, the value of N, the length L of the second window, the number K of the second windows and other information involved in the above-mentioned various second condition determination processes may be agreed upon by the protocol, or configured to the UE by the base station. For example, the network notifies to the UE through a DCI, an MAC CE, an RRC signaling, an RRC reconfiguration message, a system broadcast, an MIB, an SIB1, an SIB, or the like. For example, the base station indicates the UE to monitor the performance of the first scheme based on AI/ML for M (which is equal to 20) times, and in a case where it is determined that the performance of the first scheme based on AI/ML is relatively good for N (which is equal to 3) times, the second event is triggered. For another example, the base station indicates the UE to monitor the performance of the first scheme based on AI/ML for M (which is equal to 10) times within 20 time slots, and in a case where it is determined that the performance of the first scheme based on AI/ML is relatively good for N (which is equal to 2) times, the second event is triggered.

The settings of the values of M, the interval time of determination for M times, N, and L under the first condition and the specific values of M, the interval time of determination for M times, N, and L under the second condition may be independent and different.

### 1. Periodicity:

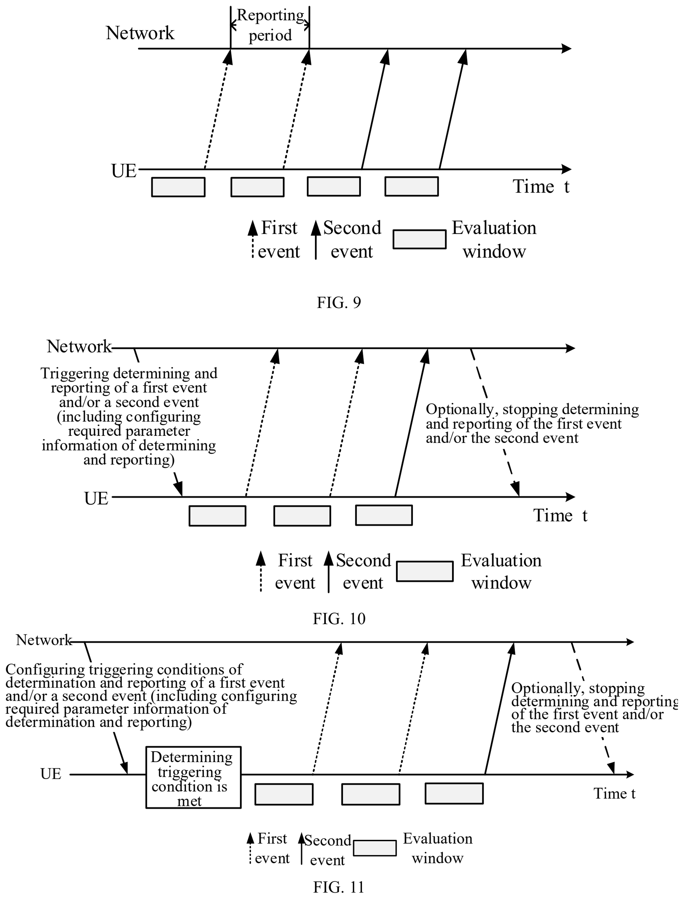

As illustrated in FIG. 9, the various determinations of the first condition and/or the second condition, or the reporting (the first event and/or the second event, or the first indication information and/or the second indication information) may be periodic. For example, the UE may use a first time interval as a period for performing the above-mentioned determination of the first condition, such as X ms (1 ms, 5 ms, 10 ms, 20 ms, 40 ms, 50 ms, 80 ms, 160 ms, etc.), or X frames or sub-frames.

The network may notify, through a DCI, an MAC CE, an RRC signaling, an RRC reconfiguration message, a system broadcast, an MIB, an SIB1, an SIB, or the like, one or more of the following information: a period of reporting the first event and/or the second event by the UE, or a period of reporting the first indication information and/or the second indication information by the UE, a period of reporting the first event and/or the second event by the UE, or a reporting time domain position (e.g., reporting at the T-th ms, or the T-th sub-frame, or the T-th time slot) of the first indication information and/or the second indication information within the period.

The advantage of periodic reporting is that real-time monitoring may be performed on the performance of the first scheme based on AI/ML, and the performance deterioration (corresponding to the first event) or improvement (corresponding to the second event) of the first scheme may be discovered quickly. The reporting period and the evaluation window or the time span of the evaluation sample during each evaluation may be different.

### 2. Network-triggered:

As illustrated in FIG. 10, the determination of the first condition and/or the second condition, or the reporting (the reporting of the first event and/or the second event, or the reporting of the first indication information and/or the second indication information) may be triggered by a base station. For example, the network triggers the UE to perform performance evaluation of the first scheme. The network transmits a third message to the UE, where the third message is used to indicate the UE to make a determination on the first condition and/or the second condition (reporting of the first event and/or the second event, or reporting of the first indication information and/or the second indication information).

The third message may indicate one or more of an event type that need to be reported, a value of M, an interval time of determination for M times, a value of N, a value of L, an period of the evaluation window, or a length of the evaluation window in the above scheme, and/or may indicate one or more of a period, a time domain position, or the reporting number of the determination and reporting (reporting of the first event and/or the second event, or reporting of the first indication information and/or the second indication information) based on the first condition and/or the second condition.

The third message may be a message that the network triggers the UE to report the first event and/or the second event, or triggers the UE to report the first indication information and/or the second indication information. The third message may be notified to the UE by the network through one or more of a DCI, an MAC CE, an RRC signaling, an RRC reconfiguration message, a system broadcast, an MIB, an SIB1, an SIB, or the like.

The third message may be 1 bit or N bits indication information. The evaluation mode and/or reporting mode indicated by the indication information may be agreed upon by a protocol or pre-configured. For example, the evaluation mode and/or reporting mode represented by different values of the above 1 bit or N bits are notified to the UE through an RRC message.

### 3. Event-triggered:

As illustrated in FIG. 11, the determination of the first condition and/or the second condition, or the reporting (the reporting of the first event and/or the second event, or the reporting of the first indication information and/or the second indication information) may be event-triggered. For example, in a case where the performance of the first scheme is less than a specific triggering threshold, the above reporting is triggered, and/or in a case where the performance of the first scheme is greater than a specific recovery threshold, the above reporting is stopped. The above conditions (or events) may be agreed upon by a protocol. Alternatively, the protocol may stipulate the above event-triggered mode, but the specific triggering threshold and/or recovery threshold may be configured to the UE by the network. Alternatively, the protocol may stipulate the above event-triggered mode, the network triggers the event-triggered reporting mode, and the network configures the triggering threshold and/or the recovery threshold to the UE. The network transmits a fourth message to the UE, and the fourth message is used to indicate the UE to make a determination of the event-triggered first condition and/or second condition (or reporting of the first event and/or the second event, or reporting of the first indication information and/or the second indication information).

The fourth message may include one or more of the following information: indicating determination of the above event-triggered first condition and/or second condition, or reporting (reporting of the first event and/or the second event, or reporting of the first indication information and/or the second indication information), indicating the triggering threshold, and indicating the recovery threshold. In addition, the network may also indicate one or more of the event type that need to be reported, the value of M, the interval time of determination for M times, the value of N, the value of L, the period of the evaluation window, and the length of the evaluation window in the above scheme to the UE, and/or indicate one or more of the period, the time domain position, or the reporting number of the determination and reporting (reporting of the first event and/or the second event, or reporting of the first indication information and/or the second indication information) based on the first condition and/or the second condition.

The fourth message may be a message that a network configuration event triggers the UE to report the first event and/or the second event, or to report the first indication information and/or the second indication information. The fourth message may be notified to the UE by the network through one or more of a DCI, an MAC CE, an RRC signaling, an RRC reconfiguration message, a system broadcast, an MIB, an SIB1, an SIB, or the like.

The fourth message may be 1 bit or N bits indication information. The triggering condition, and/or the evaluation mode, and/or the reporting mode indicated by the indication information are agreed upon by a protocol or pre-configured. For example, the triggering condition, the evaluation mode, and the reporting mode represented by the different values of the 1 bit or N bits are notified to the UE through an RRC message.

During the stability evaluation of the UE, only the first condition may be determined, or only the second condition may be determined, or both the first condition and the second condition may be determined. Correspondingly, if only the first condition is determined, only the first event or the first indication information may be reported. If only the second condition is determined, only the second event or the second indication information may be reported. If both the first condition and the second condition are determined, both the first event (first indication information) and the second event (second indication information) may be reported.

### Second. Basic performance evaluation (Level 1 evaluation):

In determination of the first condition and/or the second condition, the first scheme may be determined for a single time by one or more of the following methods, so as to determine whether the performance of the first scheme is poor or good.

(1) Spectral efficiency and/or throughput after using the first scheme or assuming that the first scheme is used. For example, if the spectrum efficiency is less than a first threshold, or the throughput is less than a first threshold, it is determined that the performance of the first scheme is relatively poor. For another example, if the spectrum efficiency is greater than a second threshold, or the throughput is greater than a second threshold, it is determined that the performance of the first scheme is relatively good.

(2) Block error rate (BLER) after using the first scheme or assuming that the first scheme is used. For example, if the BLER is greater than a first threshold, it is determined that the performance of the first scheme is relatively poor. For another example, if the BLER is less than a second threshold, it is determined that the performance of the first scheme is relatively good.

(3) a SGCS, a GCS, an MSE, or an NMSE metric calculated after using the first scheme or assuming that the first scheme is used.

(3-1) For example, in a case where the CSI compression and recovery scheme is used as the first scheme, an example is as follows.

If the calculated SGCS or GCS between input information and output information based on the first scheme is less than a first threshold, it is determined that the performance of the CSI compression and recovery scheme is relatively poor. If the calculated SGCS or GCS between the input information and the output information based on the first scheme is greater than a second threshold, it is determined that the performance of the CSI compression and recovery scheme is relatively good.

If the calculated MSE or NMSE between the input information and the output information based on the first scheme is greater than a first threshold, it is determined that the performance of the CSI compression and recovery scheme is relatively poor. If the calculated MSE or NMSE between the input information and the output information based on the first scheme is less than a second threshold, it is determined that the performance of the CSI compression and recovery scheme is relatively good.

If a probability that the calculated SGCS between the input information and the output information based on the first scheme is greater than the target SGCS, or a probability that the calculated GCS between the input information and the output information based on the first scheme is greater than the target GCS is less than a first threshold, it is determined that the performance of the CSI compression and recovery scheme is relatively poor. If the probability that the calculated SGCS between the input information and the output information based on the first scheme is greater than the target SGCS, or the probability that the calculated GCS between the input information and the output information based on the first scheme is greater than the target GCS is greater than a second threshold, it is determined that the performance of the CSI compression and recovery scheme is relatively good.

If a probability that the MSE between the input information and the output information based on the first scheme is less than the target MSE or a probability that the NMSE between the input information and the output information based on the first scheme is less than the target NMSE is greater than a first threshold, it is determined that the performance of the CSI compression and recovery scheme is relatively poor. If the probability that the MSE between the input information and the output information based on the first scheme is less than the target MSE, or the probability that the NMSE between the input information and the output information based on the first scheme is less than the target NMSE is less than a second threshold, it is determined that the performance of the CSI compression and recovery scheme is relatively good.

(3-2) For another example, in a case where the CSI prediction scheme is used as the first scheme, an example is as follows.

If the calculated SGCS or GCS between the predicted CSI information based on the first scheme and the target CSI information is less than a first threshold, it is determined that the performance of the CSI prediction scheme is relatively poor. If the calculated SGCS or GCS between the predicted CSI information based on the first scheme and the target CSI information is greater than a second threshold, it is determined that the performance of the CSI prediction scheme is relatively good.

If the calculated MSE or NMSE between the predicted CSI information based on the first scheme and the target CSI information is less than a first threshold, it is determined that the performance of the CSI prediction scheme is relatively poor. If the calculated SGCS or GCS between the predicted CSI information based on the first scheme and the target CSI information is greater than a second threshold, it is determined that the performance of the CSI prediction scheme is relatively good.

If a probability that the calculated SGCS between the predicted CSI information based on the first scheme and the target CSI information is greater than the target SGCS, or a probability that the calculated GCS between the predicted CSI information based on the first scheme and the target CSI information is greater than the target GCS is less than a first threshold, it is determined that the performance of the CSI prediction scheme is relatively poor. If the probability that the calculated SGCS between the predicted CSI information based on the first scheme and the target CSI information is greater than the target SGCS, or the probability that the calculated GCS between the predicted CSI information based on the first scheme and the target CSI information is greater than the target GCS is greater than a second threshold, it is determined that the performance of the CSI prediction scheme is relatively good.

If a probability that the MSE between the predicted CSI information based on the first scheme and the target CSI information is less than the target MSE, or a probability that the NMSE between the predicted CSI information based on the first scheme and the target CSI information is less than the target NMSE is less than a first threshold, it is determined that the performance of the CSI prediction scheme is relatively poor. If the probability that the calculated MSE between the predicted CSI information based on the first scheme and the target CSI information is less than the target MSE, or the probability that the NMSE between the predicted CSI information based on the first scheme and the target CSI information is less than the target NMSE is greater than a second threshold, it is determined that the performance of the CSI prediction scheme is relatively good.

(4) An example of positioning accuracy after using the first scheme or assuming that the first scheme is used is as follows.

If the positioning accuracy obtained based on the output result of the first scheme is less than a first threshold, it is determined that the performance of the positioning scheme based on AI and/or ML is relatively poor. If the positioning accuracy obtained based on the output result of the first scheme is greater than a second threshold, it is determined that the performance of the positioning scheme based on AI and/or ML is relatively good.

If a probability that the positioning accuracy obtained based on the output result of the first scheme is greater than the target accuracy threshold is less than a first threshold, it is determined that the performance of the positioning scheme based on AI and/or ML is relatively poor. If the probability that the positioning accuracy based on the output result of the first scheme is greater than the target accuracy threshold is greater than a second threshold, it is determined that the performance of the positioning scheme based on AI and/or ML is relatively good.

(5) An example of beam prediction accuracy after using the first scheme or assuming that the first scheme is used is as follows.

It is directly determined whether a predicted beam obtained from the output result of the first scheme is (or includes) a target beam, or is not (or does not include) the target beam.

If an RSRP difference, an RSRQ difference, an SINR difference, or a beam angle difference between the predicted beam obtained from the output result of the first scheme and the target beam is greater than a first threshold, it is determined that the performance of the beam prediction scheme is relatively poor. If the RSRP difference, the RSRQ difference, the SINR difference, or the beam angle difference between the predicted beam obtained from the output results of the first scheme and the target beam is less than a second threshold, it is determined that the performance of the beam prediction scheme is relatively good.

If the predicted beam obtained from the output result of the first scheme is not (or does not include) the target beam, it is determined that the performance of the beam prediction scheme is relatively poor. If the predicted beam obtained from the output result of the first scheme is (or includes) the target beam, it is determined that the performance of the beam prediction scheme is relatively good.

If the probability that the predicted beam obtained from the output result of the first scheme is (or includes) the target beam is less than a first threshold, it is determined that the performance of the beam prediction scheme is relatively poor. If the probability that the predicted beam obtained from the output result of the first scheme is (or includes) the target beam is greater than a second threshold, it is determined that the performance of the beam prediction scheme is relatively good.

(6) An example of beam selection accuracy after using the first scheme or assuming that the first scheme is used is as follows.

It is directly determined whether a selected beam obtained from the output result of the first scheme is (or includes) a target beam, or is not (or does not include) the target beam.

If an RSRP difference, an RSRQ difference, an SINR difference, or a beam angle difference between the selected beam obtained from the output result of the first scheme and the target beam is greater than a first threshold, it is determined that the performance of the beam selection scheme is relatively poor. If the RSRP difference, the RSRQ difference, the SINR difference, or the beam angle difference between the selected beam obtained from the output result of the first scheme and the target beam is less than a second threshold, it is determined that the performance of the beam selection scheme is relatively good.

If the selected beam obtained from the output result of the first scheme is not (or does not include) the target beam, it is determined that the performance of the beam prediction scheme is relatively poor. If the selected beam obtained from the output result of the first scheme is (or includes) the target beam, it is determined that the performance of the beam prediction scheme is relatively good.

If the probability that the selected beam obtained from the output result of the first scheme is (or includes) the target beam is less than a first threshold, it is determined that the performance of the beam selection scheme is relatively poor. If the probability that the selected beam obtained from the output result of the first scheme is (or includes) the target beam is greater than a second threshold, it is determined that the performance of the beam prediction scheme is relatively good.

(7) In a case where a difference between the information data input to the first scheme and the expected information data of the first scheme is greater than a first threshold, it is determined that the performance of the first scheme is relatively poor. In a case where the difference between the information data input into the first scheme and the expected information data of the first scheme is less than a second threshold, it is determined that the performance of the first scheme is relatively good. For example, the information data difference may include a comparison of the similarity between the data input into the first scheme and data in a target database, such as through MSE/NMSE/GCS/SGCS.

(8) After using the first scheme or assuming that the first scheme is used, if the required computing power is insufficient, the performance of the first scheme is determined to be relatively poor; and if the required computing power is sufficient, the performance of the first scheme is determined to be relatively good.

The first threshold, the second threshold, the target threshold, and the target accuracy involved in the above-mentioned various schemes may be agreed upon by the protocol or configured by the network to the UE. The network transmits a fifth message to the UE, where the fifth message is used to indicate one or more of the first threshold, the second threshold, the target threshold, and the target accuracy to the UE.

The first thresholds, the second thresholds, the target thresholds, the target accuracies of different schemes may be different. The first threshold and the second threshold as mentioned above may be thresholds about the following information: spectral efficiency, throughput, BLER, SGCS, GCS, MSE, NMSE, probability that SGCS is greater than the target SGCS or probability that GCS is greater than the target GCS, probability that MSE is less than the target MSE or probability that NMSE is less than the target NMSE, positioning accuracy, probability that the positioning accuracy is greater than a reference accuracy threshold, RSRP difference, RSRQ difference, SINR difference, or beam angle difference, probability that the predicted beam obtained from the output result of the first scheme is (or includes) the target beam, probability that the selected beam obtained from the output result of the first scheme is (or includes) the target beam, difference between the information data input into the first scheme and the expected information data of the first scheme (e.g., the similarity between the data input into the first scheme and the data in the target database).

Examples of the target threshold and the target accuracy above-mentioned include the following. For example, the target threshold is the target SGCS or the target GCS, for example, the SGCS or the GCS is equal to 0.8, 0.9, 0.95, 0.98, 0.99, 0.995, or 0.999. For another example, the target NMSE or the target MSE is equal to x*10^{(-y)}, where x and y are integers; for example, in a case where x is 1 and y is 3, 4, 5, 6 or 7, the target NMSE or the target MSE is equal to 0.001, 0.0001, 0.00001, 0.000001 or 0.0000001, respectively. For another example, the target accuracy is the target positioning accuracy, such as 1 meter, 0.2 meters, 0.1 meters, 5 centimeters, 2 centimeters, or 1 centimeter.

The network may notify the fifth message to the UE through one or more of the DCI, the MAC CE, the RRC signaling, the RRC reconfiguration message, the system broadcast, the MIB, the SIB1, the SIB, or the like. For example, the fifth message may be 1 bit or N bits indication information, indicating the correspondence between one or more of the first threshold, the second threshold, the target threshold, or the target accuracy indicated by the indication information and the indication bit. The corresponding relationship may be agreed upon by the protocol or pre-configured, for example, comprehensively indicating 2 bits through an RRC message, or separately indicating the first threshold and the second threshold of the CSI compression and recovery use cases.

In the basic performance evaluation process, the above-mentioned determination conditions may also be used in combination. For example, the performance of the first scheme is determined to be relatively good in a case where some of the conditions are met to determine that the performance of the first scheme is relatively good. Alternatively, the performance of the first scheme is determined to be relatively good in a case where only one of several conditions is met to determine that the performance of the first scheme is relatively good. For example, the performance of the first scheme is determined to be relatively poor in a case where some of the conditions are met to determine that the performance of the first scheme is relatively poor. Alternatively, in a case where only one of several conditions is met to determine that the performance of the first scheme is relatively poor, the performance of the first scheme is determined to be relatively poor.

Example 2: A method for performing performance monitoring and obtaining stability monitoring results mainly on the network side is provided.

The part of Example 2 involving the UE subject in Example 1 may be changed to the network subject, for example, the network may perform conditional determinations and the like; the part of Example 2 involving that the network configures to the UE may be deleted; and the reporting of the first event and the second event may be changed to the reporting by the physical layer of the network device to the MAC layer, or the reporting by the MAC layer to the higher layer, or the reporting by the physical layer to the higher layer.

### First. Stability evaluation phase (Level 2 evaluation):

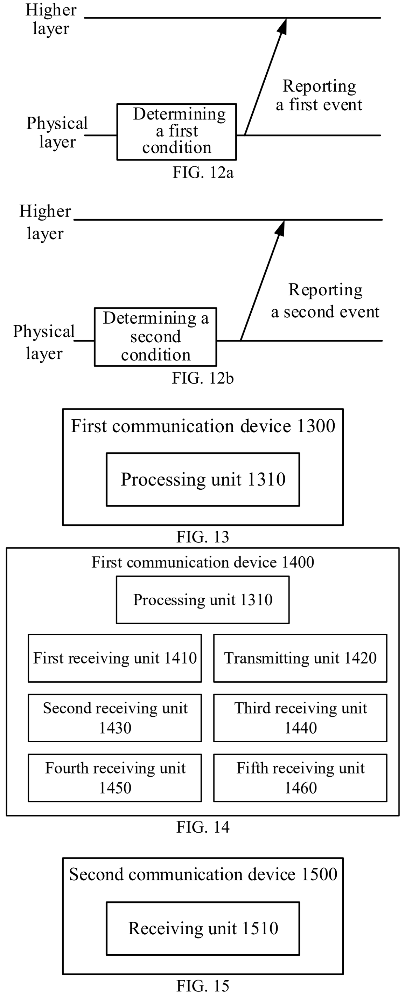

As illustrated in FIG. 12a and FIG. 12b, the behaviors of the first event/the second event may be that the physical layer or the MAC layer of the network device transmits a first indication message/a second indication message to the higher layer of the network device, or the physical layer of the network device transmits the first indication message/the second indication message to the MAC layer.

### 2. Network higher-layer-triggered:

The determination of the first condition and/or the second condition, or the reporting (the reporting of the first event and/or the second event, or the reporting of the first indication information and/or the second indication information) may be triggered by the higher layer of the network. For example, the higher layer of the network triggers the MAC layer or the physical layer to perform performance evaluation of the first scheme. For another example, the MAC layer of the network triggers the physical layer to perform the performance evaluation on the first scheme.

### 3. Event-triggered:

The determination of the first condition and/or the second condition, or the reporting (the reporting of the first event and/or the second event, or the reporting of the first indication information and/or the second indication information) may be event-triggered. For example, in a case where the performance of the first scheme is less than a specific triggering threshold, the above reporting is triggered; and/or in a case where the performance of the first scheme is greater than a specific recovery threshold, the above reporting is stopped. The above conditions (or events) may be agreed upon by a protocol. Alternatively, the protocol may stipulate the above event-triggered modes, but the specific triggering threshold and/or recovery threshold may be configured by the higher layer of the network to the MAC layer or the physical layer, or may be configured by the MAC layer of the network to the physical layer. Alternatively, the protocol may stipulate the above event-triggered modes, and the higher layer or the MAC layer of the network triggers the event-triggered reporting mode.

The AI/ML schemes are highly sensitive to sample data, environmental changes, and application conditions. The schemes in the embodiments of the present disclosure may be expected to obtain stable AI/ML performance monitoring results. For example, the embodiments of the present disclosure may avoid AI/ML performance fluctuations caused by sample data, temporary changes of the environment, temporary non-satisfaction of application conditions, and the like. For another example, the embodiments of the present disclosure may avoid introducing unnecessary determinations of failures in using AI/ML schemes and unnecessary scheme switching. For another example, the embodiments of the present disclosure may avoid unnecessary additional processes and signaling overhead such as updating and reconfiguration of models and schemes.

For example, when the CSI compression and recovery use cases based on AI/ML is performed, if a certain data sample results in relatively poor model performance, it cannot be considered that the AI/ML scheme is determined to be no longer usable at this time based on this result. Otherwise, updating the AI/ML scheme based on the one-time and single sample determination may lead to the problem of frequent model switching. Based on the method in the embodiments of the present disclosure, a method having a relatively stable AI/ML performance monitoring result may be formed through the specific design of multiple evaluations, thereby eliminating occasional failures, or AI/ML performance fluctuations caused by a small amount of non-ideal data, samples, and environmental changes.

FIG. 13 is a schematic block diagram of a first communication device 1300 in accordance with an embodiment of the present disclosure. The first communication device 1300 may include:
a processing unit 1310, configured to perform performance monitoring on a communication scheme; and trigger an event corresponding to the communication scheme in a case where the communication scheme meets a performance monitoring condition.

In an implementation, the communication scheme includes a communication scheme based on artificial intelligence (AI) and/or based on machine learning (ML).

In an embodiment, the communication scheme includes at least one of the following:
a channel state information (CSI) compression scheme based on AI and/or ML;
a CSI recovery scheme based on AI and/or ML;
an AI and/or ML scheme for processing CSI prediction;
an AI and/or ML scheme for processing beam management;
an AI and/or ML scheme for processing beam selection;
an AI and/or ML scheme for processing beam prediction; or
an AI and/or ML scheme for processing positioning.

In an implementation, a case where the communication scheme meets the performance monitoring condition includes:
performing performance monitoring on the communication scheme for M times, to obtain N first-level results of the communication scheme; and
obtaining a second-level result of the communication scheme based on the N first-level results of the communication scheme;
where M is greater than or equal to 1; N is greater than or equal to 1, and N is less than or equal to M.

In an implementation, a case of performing performance monitoring on the communication scheme for M times to obtain the N first-level results of the communication scheme includes at least one of the following:
performing the performance monitoring on the communication scheme for a single time to obtain a single first-level result of the communication scheme;
performing the performance monitoring on the communication scheme for M times to obtain M first-level results;
performing the performance monitoring on the communication scheme for M times to obtain N or consecutive N first-level results;
performing the performance monitoring on the communication scheme for M times within one or more first windows to obtain the M first-level results; or
performing the performance monitoring on the communication scheme for M times within one or more first windows to obtain the N or consecutive N first-level results;
where M is greater than 1, and N is less than M.

FIG. 14 is a schematic block diagram of another first communication device 1400 in accordance with an embodiment of the present disclosure. The first communication device may include one or more features of the above-mentioned embodiments of the first communication device, and the first communication device further includes at least part of the following contents.

A first receiving unit 1410 is configured to receive a first message, where the first message includes relevant information of the performance monitoring condition.

In an implementation, the relevant information of the performance monitoring condition includes at least one of the following: a value of M of performing the performance monitoring on the communication scheme for M times by the first communication device, an interval time of the monitoring for M times, a value of N of the N first-level results of the performance monitoring for M times, a period of first window(s) of the performance monitoring for M times, a length of the first window(s), or the number of the first window(s).

In an implementation, the performance monitoring condition includes a first condition, and the first condition is used for triggering a first event.

In an implementation, the performance monitoring condition further includes a second condition, and the second condition is used for triggering a second event.

In an implementation, the second condition is different from the first condition, a first-level result corresponding to the first condition is a first performance, a first-level result corresponding to the second condition is a second performance, and the first performance is different from the second performance.

In an implementation, as illustrated in FIG. 14, the first communication device 1400 further includes: a transmitting unit 1420 configured to report indication information corresponding to the communication scheme; where indication information reported in a case where the first condition is met is first indication information; and indication information reported in a case where the second condition is met is second indication information.

In an implementation, a monitoring behavior and/or a reporting behavior based on the performance monitoring condition is periodic.

In an implementation, as illustrated in FIG. 14, the first communication device 1400 further includes: a second receiving unit 1430 configured to receive a second message, where the second message includes at least one of the following periods:
a period of reporting an first event and/or an second event; or
a period of transmitting first indication information and/or transmitting second indication information; where the first indication information is information transmitted for reporting the first event, and the second indication information is information transmitted for reporting the second event.

In an implementation, the monitoring behavior and/or the reporting behavior based on the performance monitoring condition is network-triggered.

In an implementation, as illustrated in FIG. 14, the first communication device 1400 further includes: a third receiving unit 1440 configured to receive a third message, where the third message is configured to indicate the first communication device to perform the monitoring behavior and/or the reporting behavior based on the performance monitoring condition.

In an implementation, the third message is used to indicate at least one of the following:
an event type that need to be reported in the communication scheme;
one or more of a value of M, an interval time of monitoring for M times, a value of N, a period of first window(s), a length of the first window(s), or the number of the first window(s);
one or more of a period, a time domain location, or the reporting number of the monitoring behavior and/or the reporting behavior based on the performance monitoring condition;
a performance monitoring condition; or
a reporting mode.

In an implementation, the monitoring behavior and/or the reporting behavior based on the performance monitoring condition is event-triggered.

In an implementation, the event-triggered mode includes at least one of the following:
triggering the monitoring behavior and/or the reporting behavior based on the performance monitoring condition if a parameter value corresponding to a first-level result of the communication scheme is less than a triggering threshold; or
stopping the monitoring behavior and/or the reporting behavior based on the performance monitoring condition if the parameter value corresponding to the first-level result of the communication scheme is greater than a recovery threshold.

In an implementation, the event-triggered mode is agreed upon by a protocol.

In an implementation, as illustrated in FIG. 14, the first communication device 1400 further includes: a fourth receiving unit 1450 configured to receive a fourth message, where the fourth message is used to indicate the first communication device to trigger, based on an event, the monitoring behavior and/or the reporting behavior based on the performance monitoring condition.

In an implementation, the fourth message is used to indicate at least one of the following:
a triggering threshold;
a recovery threshold;
an event type that need to be reported in the communication scheme;
one or more of a value of M, an interval time of monitoring for M times, a value of N, a period of first window(s), a length of the first window(s), or the number of the first window(s);
one or more of a period, a time domain location, or the reporting number of the monitoring behavior and/or the reporting behavior based on the performance monitoring condition;
an event triggering condition;
a performance monitoring condition; or
a reporting mode.

In an implementation, the first-level result includes: after using the communication scheme or assuming that the communication scheme is used, that the first-level result of the communication scheme is a first performance if spectrum efficiency and/or throughput is less than a first threshold; or that the first-level result of the communication scheme is a second performance if the spectrum efficiency and/or the throughput is greater than a second threshold.

In an implementation, the first-level result includes: after using the communication scheme or assuming that the communication scheme is used, that the first-level result of the communication scheme is a first performance if a block error rate (BLER) is greater than a first threshold; or that the first-level result of the communication scheme is a second performance if the BLER is less than a second threshold.

In an implementation, the first-level result includes: after using the communication scheme or assuming that the communication scheme is used, a result of at least one of square of generalized cosine similarity (SGCS), generalized cosine similarity (GCS), mean square error (MSE) or normalized mean square error (NMSE).

In an implementation, in a case where the communication scheme is a CSI compression and/or recovery scheme, the first-level result includes at least one of the following:
that a performance of the CSI compression and/or recovery scheme is a first performance if a SGCS or a GCS between input information and output information of the communication scheme is less than a first threshold; or that the performance of the CSI compression and/or recovery scheme is a second performance if the SGCS or the GCS between the input information and the output information of the communication scheme is greater than a second threshold;
that the performance of the CSI compression and/or recovery scheme is a first performance if an MSE or an NMSE between the input information and the output information of the communication scheme is greater than a first threshold; or that the performance of the CSI compression and/or recovery scheme is a second performance if the MSE or the NMSE between the input information and the output information of the communication scheme is less than a second threshold;
that the performance of the CSI compression and/or recovery scheme is a first performance if a probability that the SGCS between the input information and the output information of the communication scheme is greater than a target SGCS, or a probability that the GCS between the input information and the output information of the communication scheme is greater than a target GCS is less than a first threshold; or that the performance of the CSI compression and/or recovery scheme is a second performance if the probability that the SGCS between the input information and the output information of the communication scheme is greater than the target SGCS, or the probability that the GCS between the input information and the output information of the communication scheme is greater than the target GCS is greater than a second threshold; or
that the performance of the CSI compression and/or recovery scheme is a first performance if a probability that the MSE between the input information and the output information of the communication scheme is less than a target MSE, or a probability that the NMSE between the input information and the output information of the communication scheme is less than a target NMSE is greater than a first threshold; or that the performance of the CSI compression and/or recovery scheme is a second performance if the probability that the MSE between the input information and the output information of the communication scheme is less than the target MSE, or the probability that the NMSE between the input information and the output information of the communication scheme is less than the target NMSE is less than a second threshold.

In an implementation, in a case where the communication scheme is a CSI prediction scheme, the first-level result includes at least one of the following:
that a performance of the CSI prediction scheme is a first performance if a SGCS or a GCS between predicted CSI information of the communication scheme and target CSI information is less than a first threshold; or that the performance of the CSI prediction scheme is a second performance if the SGCS or the GCS between the predicted CSI information of the communication scheme and the target CSI information is greater than a second threshold;
that the performance of the CSI prediction scheme is a first performance if an MSE or an NMSE between the predicted CSI information of the communication scheme and the target CSI information is less than a first threshold; or that the performance of the CSI prediction scheme is a second performance if the SGCS or the GCS between the predicted CSI information of the communication scheme and the target CSI information is greater than a second threshold;
that the performance of the CSI prediction scheme is a first performance if a probability that the SGCS between the predicted CSI information of the communication scheme and the target CSI information is greater than a target SGCS, or a probability that the GCS between the predicted CSI information of the communication scheme and the target CSI information is greater than a target GCS is less than a first threshold; or that the performance of the CSI prediction scheme is a second performance if the probability that the SGCS between the predicted CSI information of the communication scheme and the target CSI information is greater than the target SGCS, or the probability that the GCS between the predicted CSI information of the communication scheme and the target CSI information is greater than the target GCS is greater than a second threshold; or
that the performance of the CSI prediction scheme is a first performance if a probability that the MSE between the predicted CSI information of the communication scheme and the target CSI information is less than a target MSE, or a probability that an NMSE between the predicted CSI information of the communication scheme and the target CSI information is less than a target NMSE is less than a first threshold; or that the performance of the CSI prediction scheme is a second performance if the probability that the MSE between the predicted CSI information of the communication scheme and the target CSI information is less than the target MSE, or the probability that the NMSE between the predicted CSI information of the communication scheme and the target CSI information is less than the target NMSE is greater than a second threshold.

In an implementation, the first-level result includes: after using the communication scheme or assuming that the communication scheme is used, at least one of the following results based on positioning accuracy:
that a performance of a positioning scheme based on AI and/or ML is a first performance if positioning accuracy obtained from an output result of the communication scheme is less than a first threshold; or that the performance of the positioning scheme based on AI and/or ML is a second performance if the positioning accuracy from the output result of the communication scheme is greater than a second threshold; or
that the performance of the positioning scheme based on AI and/or ML is a first performance if a probability that the positioning accuracy obtained from the output result of the communication scheme is greater than a target accuracy threshold is less than a first threshold; or that the performance of the positioning scheme based on AI and/or ML is a second performance if the probability that the positioning accuracy from the output result of the communication scheme is greater than the target accuracy threshold is greater than a second threshold.

In an implementation, the first-level result includes: after using the communication scheme or assuming that the communication scheme is used, at least one of the following results based on beam prediction accuracy:
that a predicted beam obtained from an output result of the communication scheme is a target beam or includes the target beam, or is not the target beam or does not include the target beam;
that a performance of a beam prediction scheme is a first performance if at least one of a reference signal received power (RSRP) difference, a reference signal received quality (RSRQ) difference, a signal interference noise ratio (SINR) difference, or a beam angle difference between the predicted beam obtained from the output result of the communication scheme and the target beam is greater than a first threshold; or that the performance of the beam prediction scheme is a second performance if at least one of the RSRP difference, the RSRQ difference, the SINR difference, or the beam angle difference between the predicted beam obtained from the output result of the communication scheme and the target beam is less than a second threshold;
that the performance of the beam prediction scheme is a first performance if the predicted beam obtained from the output result of the communication scheme is not the target beam or does not include the target beam; or that the performance of the beam prediction scheme is a second performance if the predicted beam obtained from the output result of the communication scheme is the target beam or includes the target beam; or
that the performance of the beam prediction scheme is a first performance if a probability that the predicted beam obtained from the output result of the communication scheme is the target beam or includes the target beam is less than a first threshold; or that the performance of the beam prediction scheme is a second performance if the probability that the predicted beam obtained from the output result of the communication scheme is the target beam or includes the target beam is greater than a second threshold.

In an implementation, the first-level result includes: after using the communication scheme or assuming that the communication scheme is used, at least one of the following results based on beam selection accuracy:
that a selected beam obtained from an output result of the communication scheme is or includes a target beam, or is not the target beam or does not include the target beam;
that a performance of a beam selection scheme is a first performance if at least one of an RSRP difference, an RSRQ difference, an SINR difference, or a beam angle difference between the selected beam obtained from the output result of the communication scheme and the target beam is greater than a first threshold; or that the performance of the beam selection scheme is a second performance if at least one of the RSRP difference, the RSRQ difference, the SINR difference, or the beam angle difference between the selected beam obtained from the output result of the communication scheme and the target beam is less than a second threshold;
that the performance of the beam prediction scheme is a first performance if the selected beam obtained from the output result of the communication scheme is not the target beam or does not include the target beam; or that the performance of the beam prediction scheme is a second performance if the selected beam obtained from the output result of the communication scheme is the target beam or includes the target beam; or
that the performance of the beam selection scheme is a first performance if a probability that the selected beam obtained from the output result of the communication scheme is the target beam or includes the target beam is less than a first threshold; or that the performance of the beam prediction scheme is a second performance if the probability that the selected beam obtained from the output result of the communication scheme is the target beam or includes the target beam is greater than a second threshold.

In an implementation, the first-level result includes: that a performance of the communication scheme is a first performance if a difference between information data input into the communication scheme and expected information data of the communication scheme is greater than a first threshold; or that the performance of the communication scheme is a second performance if the difference between the information data input into the communication scheme and the expected information data of the communication scheme is less than a second threshold.

In an implementation, the first-level result includes: after using the communication scheme or assuming that the communication scheme is used, that the performance of the communication scheme is a first performance if computing power required is insufficient; or that the performance of the communication scheme is a second performance if the computing power required is sufficient.

In an implementation, as illustrated in FIG. 14, the first communication device 1400 further includes: a fifth receiving unit 1460 configured to receive a fifth message, where the fifth message is used to indicate a threshold and/or accuracy required for evaluating the first-level result of the communication scheme.

In an implementation, a type of the message includes at least one of the following:
a medium access control control element (MAC CE), a radio resource control (RRC) signaling, an RRC reconfiguration message, a system broadcast, a master information block (MIB), a system information block (SIB), or an SIB1.

In an implementation, the first communication device is a terminal device.

In an implementation, the first communication device is a physical layer or an MAC layer of a network device.

The first communication devices 1300 and 1400 in the embodiments of the present disclosure may implement the corresponding functions of the first communication device in the aforementioned method embodiments. The processes, functions, implementation methods and beneficial effects corresponding to each module (sub-module, unit or component) in the first communication devices 1300 and 1400 may be found in the corresponding description in the above method embodiments, and details are not repeated here. It should be noted that the functions described in the various modules (sub-modules, units or components) in the first communication devices 1300 and 1400 in the embodiments of the present disclosure may be implemented by different modules (sub-modules, units or components) or by the same module (sub-module, unit or component).

FIG. 15 is a schematic block diagram of a second communication device 1500 in accordance with an embodiment of the present disclosure. The second communication device 1500 may include:
a receiving unit 1510, configured to receive an event triggered by a first communication device in a case where a performance monitoring condition is met.

In an implementation, the communication scheme includes a communication scheme based on artificial intelligence (AI) and/or based on machine learning (ML).

In an implementation, the communication scheme includes at least one of the following:
a channel state information (CSI) compression scheme based on AI and/or ML;
a CSI recovery scheme based on AI and/or ML;
an AI and/or ML scheme for processing CSI prediction;
an AI and/or ML scheme for processing beam management;
an AI and/or ML scheme for processing beam selection;
an AI and/or ML scheme for processing beam prediction; or
an AI and/or ML scheme for processing positioning.

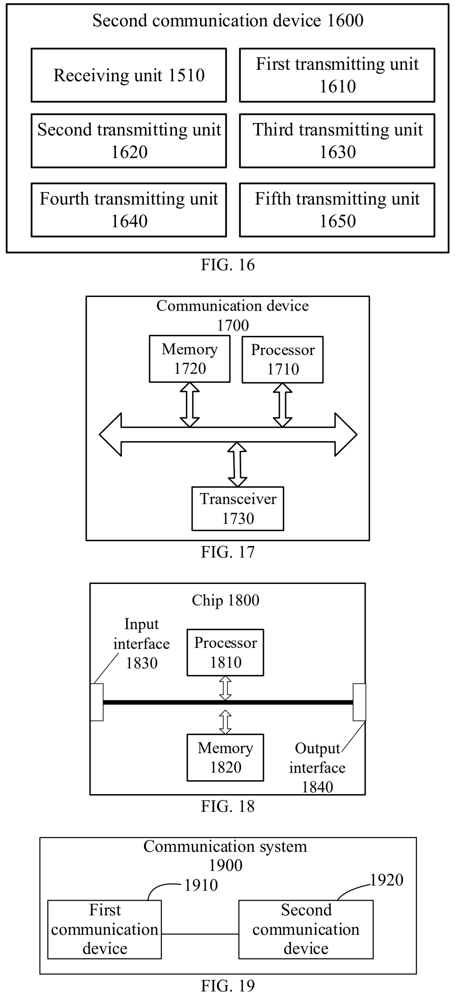

FIG. 16 is a schematic block diagram of another second communication device 1600 in accordance with an embodiment of the present disclosure. The second communication device may include one or more features of the above-mentioned embodiments of the second communication device, and the second communication device further includes at least part of the following contents.

A first transmitting unit 1610 is configured to transmit a first message, where the first message includes relevant information of a performance monitoring condition, and the performance monitoring condition is used for triggering an event corresponding to a communication scheme at the first communication device.

In an implementation, the relevant information of the performance monitoring condition includes at least one of the following:
a value of M of performing performance monitoring on the communication scheme for M times by the first communication device, an interval time of the monitoring for M times, a value of N of N first-level results of the performance monitoring for M times, a period of first window(s) of the performance monitoring for M times, a length of the first window(s), or the number of the first window(s).

In an implementation, the performance monitoring condition includes a first condition, and the first condition is used for triggering a first event.

In an implementation, the performance monitoring condition further includes a second condition, and the second condition is used for triggering a second event.

In an implementation, the second condition is different from the first condition, a first-level result corresponding to the first condition is a first performance, a first-level result corresponding to the second condition is a second performance, and the first performance is different from the second performance.

In an implementation, the receiving unit is further configured to receive indication information corresponding to the communication scheme reported by the first communication device;
where indication information reported in a case where the first condition is met is first indication information; and indication information reported in a case where the second condition is met is second indication information.

In an implementation, a monitoring behavior and/or a reporting behavior based on the performance monitoring condition is periodic.

In an implementation, as illustrated in FIG. 16, the second communication device 1600 further includes: a second transmitting unit 1620 configured to transmit a second message, where the second message includes at least one of the following periods:
a period of reporting an first event and/or an second event; or
a period of transmitting first indication information and/or transmitting second indication information; where the first indication information is information transmitted for reporting the first event, and the second indication information is information transmitted for reporting the second event.

In an implementation, the monitoring behavior and/or the reporting behavior based on the performance monitoring condition is network-triggered.

In an implementation, as illustrated in FIG. 16, the second communication device 1600 further includes: a third transmitting unit 1630 configured to transmit a third message, where the third message is used to indicate the first communication device to perform the monitoring behavior and/or the reporting behavior based on the performance monitoring condition.

In an implementation, the third message is used to indicate at least one of the following:
an event type that need to be reported in the communication scheme;
one or more of a value of M, an interval time of monitoring for M times, a value of N, a period of first window(s), a length of the first window(s), or the number of the first window(s);
one or more of a period, a time domain location, or the reporting number of the monitoring behavior and/or the reporting behavior based on the performance monitoring condition;
a performance monitoring condition; or
a reporting mode.

In an implementation, the monitoring behavior and/or the reporting behavior based on the performance monitoring condition is event-triggered.

In an implementation, the event-triggered mode includes at least one of the following:
triggering the monitoring behavior and/or the reporting behavior based on the performance monitoring condition if a parameter value corresponding to a first-level result of the communication scheme is less than a triggering threshold; or
stopping the monitoring behavior and/or the reporting behavior based on the performance monitoring condition if the parameter value corresponding to the first-level result of the communication scheme is greater than a recovery threshold.

In an implementation, the event-triggered mode is agreed upon by a protocol.

In an implementation, as illustrated in FIG. 16, the second communication device 1600 further includes: a fourth transmitting unit 1640 configured to transmit a fourth message, where the fourth message is used to indicate the first communication device to trigger, based on an event, a monitoring behavior and/or a reporting behavior based on the performance monitoring condition.

In an implementation, the fourth message is used to indicate at least one of the following:
a triggering threshold;
a recovery threshold;
an event type that need to be reported in the communication scheme;
one or more of a value of M, an interval time of monitoring for M times, a value of N, a period of first window(s), a length of the first window(s), or the number of the first window(s);
one or more of a period, a time domain location, or the reporting number of the monitoring behavior and/or the reporting behavior based on the performance monitoring condition;
an event triggering condition;
a performance monitoring condition; or
a reporting mode.

In an implementation, as illustrated in FIG. 16, the second communication device 1600 further includes: a fifth transmitting unit 1650 configured to transmit a fifth message, where the fifth message is used to indicate a threshold and/or accuracy required for evaluating the first-level result of the communication scheme.

In an implementation, the type of the message includes at least one of the following:
an MAC CE, an RRC signaling, an RRC reconfiguration message, a system broadcast, an MIB, an SIB, or an SIB1.

In an implementation, the first communication device is a terminal device, and the second communication device is a network device.

In an implementation, the first communication device is a physical layer or an MAC layer of a network device, and the second communication device is a higher layer of the network device.

The second communication devices 1500 and 1600 in the embodiments of the present disclosure may implement the corresponding functions of the second communication device in the aforementioned method embodiments. The processes, functions, implementation methods and beneficial effects corresponding to each module (sub-module, unit or component) in the second communication devices 1500 and 1600 may be found in the corresponding description in the above method embodiments, and details are not repeated here. It should be noted that the functions described in the various modules (sub-modules, units or components) in the second communication devices 1500 and 1600 in the embodiments of the present disclosure may be implemented by different modules (sub-modules, units or components) or by the same module (sub-module, unit or component).

FIG. 17 is a schematic structural diagram of a communication device 1700 in accordance with the embodiments of the present disclosure. The communication device 1700 includes a processor 1710. The processor 1710 may call a computer program from a memory and run the computer program to enable the communication device 1700 to implement the methods in the embodiments of the present disclosure.

In an implementation, the communication device 1700 may further include a memory 1720. The processor 1710 may call the computer program from the memory 1720 and run the computer program to enable the communication device 1700 to implement the methods in the embodiments of the present disclosure. The memory 1720 may be a separate device independent of the processor 1710, or may be integrated into the processor 1710.

In an implementation, the communication device 1700 may further include a transceiver 1730. The processor 1710 may control the transceiver 1730 to communicate with other devices, specifically, may transmit information or data to other devices, or receive information or data transmitted by other devices.

The transceiver 1730 may include a transmitter and a receiver. The transceiver 1730 may further include an antenna (antennas), and the number of antennas may be one or more.

In an implementation, the communication device 1700 may be the first communication device in the embodiments of the present disclosure, and the first communication device 1700 may implement corresponding procedures implemented by the first communication device in various methods in the embodiments of the present disclosure, and details are not repeated here for the sake of brevity.

In an implementation, the communication device 1700 may be the second communication device in the embodiments of the present disclosure, and the second communication device 1700 may implement corresponding procedures implemented by the second communication device in various methods in the embodiments of the present disclosure, and details are not repeated here for the sake of brevity.

FIG. 18 is a schematic structural diagram of a chip 1800 in accordance with the embodiments of the present disclosure. The chip 1800 includes a processor 1810. The processor 1810 may call a computer program from a memory and run the computer program to implement the methods in the embodiments of the present disclosure.

In an implementation, the chip 1800 may further include a memory 1820. The processor 1810 may call the computer program from the memory 1820 and run the computer program to implement the methods performed by the first communication device or the second communication device in the embodiments of the present disclosure.

The memory 1820 may be a separate device independent of the processor 1810, or may be integrated into the processor 1810.

In an implementation, the chip 1800 may further include an input interface 1830. The processor 1810 may control the input interface 1830 to communicate with other devices or chips, and specifically, to acquire information or data transmitted by other devices or chips.

In an implementation, the chip 1800 may further include an output interface 1840. The processor 1810 may control the output interface 1840 to communicate with other devices or chips, and specifically, to output information or data to other devices or chips.

In an implementation, the chip may be applied to the first communication device in the embodiments of the present disclosure. The chip may implement corresponding procedures implemented by the first communication device in various methods in the embodiments of the present disclosure, and details are not repeated here for the sake of brevity.

In an implementation, the chip may be applied to the second communication device in the embodiments of the present disclosure. The chip may implement corresponding procedures implemented by the second communication device in various methods in the embodiments of the present disclosure, and details are not repeated here for the sake of brevity.

The chips applied to the first communication device and the second communication device may be the same chips or different chips.

It should be understood that the chip mentioned in the embodiments of the present disclosure may also be referred to as a system-level chip, a system chip, a chip system or a system-on-chip chip.

The above-mentioned processor may be a general-purpose processor, a digital signal processor (DSP), a field programmable gate array (FPGA), an application specific integrated circuit (ASIC) or other programmable logic devices, transistor logic devices, discrete hardware components, and the like. The above-mentioned general-purpose processor may be a microprocessor or may be any conventional processor.

The above-mentioned memory may be a volatile (transitory) memory or a non-volatile (non-transitory) memory, or may include both the volatile and non-volatile memory. The non-volatile memory may be a read-only memory (ROM), a ROM (PROM), an erasable PROM (EPROM), an electrically EPROM (EEPROM), or a flash memory. The volatile memory may be a random access memory (RAM).

It should be understood that the above-mentioned memory is exemplary but not a limited illustration. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DR RAM), etc. That is, the memory in the embodiments of the present disclosure is intended to include, but is not limited to, these and any other suitable types of memories.

FIG. 19 is a schematic block diagram of a communication system 1900 in accordance with the embodiments of the present disclosure. The communication system 1900 includes a first communication device 1910 and a second communication device 1920. The first communication device 1910 is configured to perform performance monitoring on the communication scheme; and in a case where the communication scheme meets a performance monitoring condition, the first communication device triggers an event corresponding to the communication scheme. The second communication device 1920 is configured to receive the event triggered by the first communication device in a case where the performance monitoring condition is met. The first communication device 1910 may be configured to implement the corresponding functions implemented by the first communication device in the above methods, and the second communication device 1920 may be configured to implement the corresponding functions implemented by the second communication device in the above methods, which are not repeated here for the sake of brevity.

The above embodiments may be implemented in whole or in part through software, hardware, firmware, or any combination thereof. When the embodiments are implemented by using software, the software may be implemented in a form of a computer program product in whole or in part. The computer program product includes one or more computer instructions. When computer program instructions are loaded on and executed by a computer, processes or functions according to the embodiments of the present application are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (e.g., coaxial cable, optical fiber, or digital subscriber line (DSL)) or a wireless manner (e.g., infrared, radio or microwave). The computer-readable storage medium may be any available medium accessible by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It should be understood that in the various embodiments of the present application, the magnitude of the serial number of each of the above-mentioned processes does not mean the order of execution. The order of execution of each process shall be determined by its function and internal logic, and shall not constitute any limitation on the implementation process of the embodiments of the present application.

Those skilled in the art can clearly understand that for the convenience and simplicity of description, the working processes of the systems, devices and units described above may refer to the corresponding processes in the above method embodiments, and details will not be repeated here.

The foregoing descriptions are merely specific implementations of the present application, but the protection scope of the present application is not limited thereto. Any skilled person in the art could readily conceive of changes or replacements within the technical scope of the present application, which shall all be included in the protection scope of the present application. Therefore, the protection scope of the present application shall be subject to the protection scope of the claims.

## Claims

1. A monitoring method of a communication scheme, comprising:
performing, by a first communication device, performance monitoring on the communication scheme; and
triggering, by the first communication device, an event corresponding to the communication scheme in a case where the communication scheme meets a performance monitoring condition.

2. The method according to claim 1, wherein the communication scheme comprises a communication scheme based on artificial intelligence (AI) and/or based on machine learning (ML).

3. The method according to claim 1 or 2, wherein the communication scheme comprises at least one of:
a channel state information (CSI) compression scheme based on AI and/or ML;
a CSI recovery scheme based on AI and/or ML;
an AI and/or ML scheme for processing CSI prediction;
an AI and/or ML scheme for processing beam management;
an AI and/or ML scheme for processing beam selection;
an AI and/or ML scheme for processing beam prediction; or
an AI and/or ML scheme for processing positioning.

4. The method according to any one of claims 1 to 3, wherein a case in which the communication scheme meets the performance monitoring condition comprises:
performing the performance monitoring on the communication scheme for M times to obtain N first-level results of the communication scheme; and
obtaining a second-level result of the communication scheme based on the N first-level results of the communication scheme;
wherein M is greater than or equal to 1; N is greater than or equal to 1, and N is less than or equal to M.

5. The method according to any one of claims 1 to 4, wherein a case of performing the performance monitoring on the communication scheme for M times to obtain N first-level results of the communication scheme comprises at least one of:
performing the performance monitoring on the communication scheme for a single time to obtain a single first-level result of the communication scheme;
performing the performance monitoring on the communication scheme for M times to obtain M first-level results;
performing the performance monitoring on the communication scheme for M times to obtain N or consecutive N first-level results;
performing the performance monitoring on the communication scheme for M times within one or more first windows to obtain M first-level results; or
performing the performance monitoring on the communication scheme for M times within one or more first windows to obtain N or consecutive N first-level results;
wherein M is greater than 1, and N is less than M.

6. The method according to any one of claims 1 to 5, further comprising:
receiving, by the first communication device, a first message, wherein the first message comprises relevant information of the performance monitoring condition.

7. The method according to claim 6, wherein the relevant information of the performance monitoring condition comprises at least one of: a value of M of performing the performance monitoring on the communication scheme for M times by the first communication device, an interval time of the monitoring for M times, a value of N of N first-level results of the performance monitoring for M times, a period of first window(s) of the performance monitoring for M times, a length of the first window(s), or a number of the first window(s).

8. The method according to any one of claims 1 to 7, wherein the performance monitoring condition comprises a first condition, and the first condition is used for triggering a first event.

9. The method according to claim 8, wherein the performance monitoring condition further comprises a second condition, and the second condition is used for triggering a second event.

10. The method according to claim 9, wherein the second condition is different from the first condition, a first-level result corresponding to the first condition is a first performance, a first-level result corresponding to the second condition is a second performance, and the first performance is different from the second performance.

11. The method according to any one of claims 1 to 10, wherein triggering, by the first communication device, the event corresponding to the communication scheme, comprises:
reporting, by the first communication device, indication information corresponding to the communication scheme;
wherein indication information reported in a case where a first condition is met is first indication information; and indication information reported in a case where a second condition is met is second indication information.

12. The method according to any one of claims 1 to 11, wherein a monitoring behavior and/or a reporting behavior based on the performance monitoring condition is periodic.

13. The method according to claim 12, further comprising:
receiving, by the first communication device, a second message, wherein the second message comprises at least one of following periods:
a period of reporting an first event and/or an second event; or
a period of transmitting first indication information and/or transmitting second indication information; wherein the first indication information is information transmitted for reporting the first event, and the second indication information is information transmitted for reporting the second event.

14. The method according to any one of claims 1 to 11, wherein a monitoring behavior and/or a reporting behavior based on the performance monitoring condition is network-triggered.

15. The method according to claim 14, further comprising:
receiving, by the first communication device, a third message, wherein the third message is used to indicate the first communication device to perform the monitoring behavior and/or the reporting behavior based on the performance monitoring condition.

16. The method according to claim 15, wherein the third message is used to indicate at least one of:
an event type that need to be reported in the communication scheme;
one or more of a value of M, an interval time of monitoring for M times, a value of N, a period of first window(s), a length of the first window(s), or a number of the first window(s);
one or more of a period, a time domain location, or a reporting number of the monitoring behavior and/or the reporting behavior based on the performance monitoring condition;
the performance monitoring condition; or
a reporting mode.

17. The method according to any one of claims 1 to 11, wherein a monitoring behavior and/or a reporting behavior based on the performance monitoring condition is event-triggered.

18. The method according to claim 17, wherein an event-triggered mode comprises at least one of:
triggering the monitoring behavior and/or the reporting behavior based on the performance monitoring condition if a parameter value corresponding to a first-level result of the communication scheme is less than a triggering threshold; or
stopping the monitoring behavior and/or the reporting behavior based on the performance monitoring condition if the parameter value corresponding to the first-level result of the communication scheme is greater than a recovery threshold.

19. The method according to claim 18, wherein the event-triggered mode is agreed upon by a protocol.

20. The method according to any one of claims 17 to 19, further comprising:
receiving, by the first communication device, a fourth message, wherein the fourth message is used to indicate the first communication device to trigger, based on an event, the monitoring behavior and/or the reporting behavior based on the performance monitoring condition.

21. The method according to claim 20, wherein the fourth message is used to indicate at least one of:
a triggering threshold;
a recovery threshold;
an event type that need to be reported in the communication scheme;
one or more of a value of M, an interval time of monitoring for M times, a value of N, a period of first window(s), a length of the first window(s), or a number of the first window(s);
one or more of a period, a time domain location, or a reporting number of the monitoring behavior and/or the reporting behavior based on the performance monitoring condition;
an event triggering condition;
the performance monitoring condition; or
a reporting mode.

22. The method according to claim 4, 5 or 10, wherein a first-level result comprises:
after using the communication scheme or assuming that the communication scheme is used, that the first-level result of the communication scheme is a first performance if spectrum efficiency and/or throughput is less than a first threshold; or that the first-level result of the communication scheme is a second performance if the spectrum efficiency and/or the throughput is greater than a second threshold.

23. The method according to claim 4, 5 or 22, wherein a first-level result comprises:
after using the communication scheme or assuming that the communication scheme is used, that the first-level result of the communication scheme is a first performance if a block error rate (BLER) is greater than a first threshold; or that the first-level result of the communication scheme is a second performance if the BLER is less than a second threshold.

24. The method according to claim 4, 5, 10, 22 or 23, wherein a first-level result comprises: after using the communication scheme or assuming that the communication scheme is used, a result of at least one of square of generalized cosine similarity (SGCS), generalized cosine similarity (GCS), a mean square error (MSE) or normalized mean square error (NMSE).

25. The method according to claim 24, wherein in a case where the communication scheme is a CSI compression and/or recovery scheme, the first-level result comprises at least one of:
that a performance of the CSI compression and/or recovery scheme is a first performance if a SGCS or a GCS between input information and output information of the communication scheme is less than a first threshold; or that the performance of the CSI compression and/or recovery scheme is a second performance if the SGCS or the GCS between the input information and the output information of the communication scheme is greater than a second threshold;
that the performance of the CSI compression and/or recovery scheme is the first performance if an MSE or an NMSE between the input information and the output information of the communication scheme is greater than a first threshold; or that the performance of the CSI compression and/or recovery scheme is the second performance if the MSE or the NMSE between the input information and the output information of the communication scheme is less than a second threshold;
that the performance of the CSI compression and/or recovery scheme is the first performance if a probability that the SGCS between the input information and the output information of the communication scheme is greater than a target SGCS, or a probability that the GCS between the input information and the output information of the communication scheme is greater than a target GCS is less than a first threshold; or that the performance of the CSI compression and/or recovery scheme is the second performance if the probability that the SGCS between the input information and the output information of the communication scheme is greater than the target SGCS, or the probability that the GCS between the input information and the output information of the communication scheme is greater than the target GCS is greater than a second threshold; or
that the performance of the CSI compression and/or recovery scheme is the first performance if a probability that the MSE between the input information and the output information of the communication scheme is less than a target MSE, or a probability that the NMSE between the input information and the output information of the communication scheme is less than a target NMSE is greater than a first threshold; or that the performance of the CSI compression and/or recovery scheme is the second performance if the probability that the MSE between the input information and the output information of the communication scheme is less than the target MSE, or the probability that the NMSE between the input information and the output information of the communication scheme is less than the target NMSE is less than a second threshold.

26. The method according to claim 24 or 25, wherein in a case where the communication scheme is a CSI prediction scheme, the first-level result comprises at least one of:
that a performance of the CSI prediction scheme is a first performance if a SGCS or a GCS between predicted CSI information of the communication scheme and target CSI information is less than a first threshold; or that the performance of the CSI prediction scheme is a second performance if the SGCS or the GCS between the predicted CSI information of the communication scheme and the target CSI information is greater than a second threshold;
that the performance of the CSI prediction scheme is the first performance if MSE or NMSE between the predicted CSI information of the communication scheme and the target CSI information is less than the first threshold; or that the performance of the CSI prediction scheme is the second performance if the SGCS or the GCS between the predicted CSI information of the communication scheme and the target CSI information is greater than a second threshold;
that the performance of the CSI prediction scheme is the first performance if a probability that the SGCS between the predicted CSI information of the communication scheme and the target CSI information is greater than a target SGCS, or a probability that the GCS between the predicted CSI information of the communication scheme and the target CSI information is greater than a target GCS is less than a first threshold; or that the performance of the CSI prediction scheme is the second performance if the probability that the SGCS between the predicted CSI information of the communication scheme and the target CSI information is greater than the target SGCS, or the probability that the GCS between the predicted CSI information of the communication scheme and the target CSI information is greater than the target GCS is greater than a second threshold; or
that the performance of the CSI prediction scheme is the first performance if a probability that the MSE between the predicted CSI information of the communication scheme and the target CSI information is less than a target MSE, or a probability that the NMSE between the predicted CSI information of the communication scheme and the target CSI information is less than a target NMSE is less than a first threshold; or that the performance of the CSI prediction scheme is the second performance if the probability that the MSE between the predicted CSI information of the communication scheme and the target CSI information is less than the target MSE, or the probability that the NMSE between the predicted CSI information of the communication scheme and the target CSI information is less than the target NMSE is greater than a second threshold.

27. The method according to any one of claims 4, 5, 10, and 22 to 26, wherein a first-level result comprises: after using the communication scheme or assuming that the communication scheme is used, at least one of following results based on positioning accuracy:
that a performance of a positioning scheme based on AI and/or ML is a first performance if positioning accuracy obtained from an output result of the communication scheme is less than a first threshold; or that the performance of the positioning scheme based on AI and/or ML is a second performance if the positioning accuracy from the output result of the communication scheme is greater than a second threshold; or
that the performance of the positioning scheme based on AI and/or ML is a first performance if a probability that the positioning accuracy obtained from the output result of the communication scheme is greater than a target accuracy threshold is less than a first threshold; or that the performance of the positioning scheme based on AI and/or ML is a second performance if the probability that the positioning accuracy from the output result of the communication scheme is greater than the target accuracy threshold is greater than a second threshold.

28. The method according to any one of claims 4, 5, 10, and 22 to 27, wherein a first-level result comprises: after using the communication scheme or assuming that the communication scheme is used, at least one of following results based on beam prediction accuracy:
that a predicted beam obtained from an output result of the communication scheme is a target beam or comprises the target beam, or is not the target beam or does not comprise the target beam;
that a performance of a beam prediction scheme is a first performance if at least one of a reference signal received power (RSRP) difference, a reference signal received quality (RSRQ) difference, a signal interference noise ratio (SINR) difference, or a beam angle difference between the predicted beam obtained from the output result of the communication scheme and the target beam is greater than a first threshold; or that the performance of the beam prediction scheme is a second performance if at least one of the RSRP difference, the RSRQ difference, the SINR difference, or the beam angle difference between the predicted beam obtained from the output result of the communication scheme and the target beam is less than a second threshold;
that the performance of the beam prediction scheme is the first performance if the predicted beam obtained from the output result of the communication scheme is not the target beam or does not comprise the target beam; or that the performance of the beam prediction scheme is the second performance if the predicted beam obtained from the output result of the communication scheme is the target beam or comprises the target beam; or
that the performance of the beam prediction scheme is the first performance if a probability that the predicted beam obtained from the output result of the communication scheme is the target beam or comprises the target beam is less than a first threshold; or that the performance of the beam prediction scheme is the second performance if the probability that the predicted beam obtained from the output result of the communication scheme is the target beam or comprises the target beam is greater than a second threshold.

29. The method according to any one of claims 4, 5, 10, and 22 to 28, wherein a first-level result comprises: after using the communication scheme or assuming that the communication scheme is used, at least one of following results based on beam selection accuracy:
that a selected beam obtained from an output result of the communication scheme is a target beam or comprises the target beam, or is not the target beam or does not comprise the target beam;
that a performance of a beam selection scheme is a first performance if at least one of an RSRP difference, an RSRQ difference, an SINR difference, or a beam angle difference between the selected beam obtained from an output result of the communication scheme and the target beam is greater than a first threshold; or that the performance of the beam selection scheme is a second performance if at least one of the RSRP difference, the RSRQ difference, the SINR difference, or the beam angle difference between the selected beam obtained from the output result of the communication scheme and the target beam is less than a second threshold;
that a performance of a beam prediction scheme is the first performance if the selected beam obtained from the output result of the communication scheme is not the target beam or does not comprise the target beam; or that the performance of the beam prediction scheme is the second performance if the selected beam obtained from the output result of the communication scheme is the target beam or comprises the target beam; or
that the performance of the beam selection scheme is the first performance if a probability that the selected beam obtained from the output result of the communication scheme is the target beam or comprises the target beam is less than a first threshold; or that the performance of the beam prediction scheme is the second performance if the probability that the selected beam obtained from the output result of the communication scheme is the target beam or comprises the target beam is greater than a second threshold.

30. The method according to any one of claims 4, 5, 10, and 22 to 29, wherein a first-level result comprises: that a performance of the communication scheme is a first performance if a difference between information data input into the communication scheme and expected information data of the communication scheme is greater than a first threshold; or that the performance of the communication scheme is a second performance if the difference between the information data input into the communication scheme and the expected information data of the communication scheme is less than a second threshold.

31. The method according to any one of claims 4, 5, 10, and 22 to 30, wherein a first-level result comprises: after using the communication scheme or assuming that the communication scheme is used, that a performance of the communication scheme is a first performance if computing power required is insufficient; or that the performance of the communication scheme is a second performance if the computing power required is sufficient.

32. The method according to any one of claims 4, 5, 10, and 22 to 31, further comprising:
receiving, by the first communication device, a fifth message, wherein the fifth message is used to indicate a threshold and/or accuracy required for evaluating a first-level result of the communication scheme.

33. The method according to claim 7, 13, 15, 16, 20, 21 or 32, wherein a type of the message comprises at least one of:
a medium access control control element (MAC CE), a radio resource control (RRC) signaling, an RRC reconfiguration message, a system broadcast, a master information block (MIB), a system information block (SIB), or an SIB1.

34. The method according to any one of claims 1 to 33, wherein the first communication device is a terminal device.

35. The method according to any one of claims 1 to 33, wherein the first communication device is a physical layer or a medium access control (MAC) layer of a network device.

36. A monitoring method of a communication scheme, comprising:
receiving, by a second communication device, an event triggered by a first communication device in a case where a performance monitoring condition is met.

37. The method according to claim 36, wherein the communication scheme comprises a communication scheme based on artificial intelligence (AI) and/or based on machine learning (ML).

38. The method according to claim 37 or 36, wherein the communication scheme comprises at least one of following:
a channel state information (CSI) compression scheme based on AI and/or ML;
a CSI recovery scheme based on AI and/or ML;
an AI and/or ML scheme for processing CSI prediction;
an AI and/or ML scheme for processing beam management;
an AI and/or ML scheme for processing beam selection;
an AI and/or ML scheme for processing beam prediction; or
an AI and/or ML scheme for processing positioning.

39. The method according to any one of claims 36 to 38, further comprising:
transmitting, by the second communication device, a first message, wherein the first message comprises relevant information of the performance monitoring condition, and the performance monitoring condition is used for triggering an event corresponding to the communication scheme at the first communication device.

40. The method according to claim 39, wherein the relevant information of the performance monitoring condition comprises at least one of:
a value of M of performing performance monitoring on the communication scheme for M times by the first communication device, an interval time of the monitoring for M times, a value of N of N first-level results of the performance monitoring for M times, a period of first window(s) of the performance monitoring for M times, a length of the first window(s), or a number of the first window(s).

41. The method according to any one of claims 36 to 40, wherein the performance monitoring condition comprises a first condition, and the first condition is used for triggering a first event.

42. The method according to claim 41, wherein the performance monitoring condition further comprises a second condition, and the second condition is used for triggering a second event.

43. The method according to claim 42, wherein the second condition is different from the first condition, a first-level result corresponding to the first condition is a first performance, a first-level result corresponding to the second condition is a second performance, and the first performance is different from the second performance.

44. The method according to any one of claims 36 to 43, wherein receiving, by the second communication device, the event triggered by the first communication device in the case where the performance monitoring condition is met, comprises:
receiving, by the second communication device, indication information corresponding to the communication scheme reported by the first communication device;
wherein indication information reported in a case where a first condition is met is first indication information; and indication information reported in a case where a second condition is met is second indication information.

45. The method according to any one of claims 36 to 44, wherein a monitoring behavior and/or a reporting behavior based on the performance monitoring condition is periodic.

46. The method according to claim 45, further comprising:
transmitting, by the second communication device, a second message, wherein the second message comprises at least one of following periods:
a period of reporting an first event and/or an second event; or
a period of transmitting first indication information and/or transmitting second indication information; wherein the first indication information is information transmitted for reporting the first event, and the second indication information is information transmitted for reporting the second event.

47. The method according to any one of claims 36 to 44, wherein a monitoring behavior and/or a reporting behavior based on the performance monitoring condition is network-triggered.

48. The method according to claim 47, further comprising:
transmitting, by the second communication device, a third message, wherein the third message is used to indicate the first communication device to perform the monitoring behavior and/or the reporting behavior based on the performance monitoring condition.

49. The method according to claim 48, wherein the third message is used to indicate at least one of:
an event type that need to be reported in the communication scheme;
one or more of a value of M, an interval time of monitoring for M times, a value of N, a period of first window(s), a length of the first window(s), or a number of the first window(s);
one or more of a period, a time domain location, or a reporting number of the monitoring behavior and/or the reporting behavior based on the performance monitoring condition;
the performance monitoring condition; or
a reporting mode.

50. The method according to any one of claims 36 to 44, wherein a monitoring behavior and/or a reporting behavior based on the performance monitoring condition is event-triggered.

51. The method according to claim 50, wherein an event-triggered mode comprises at least one of:
triggering the monitoring behavior and/or the reporting behavior based on the performance monitoring condition if a parameter value corresponding to a first-level result of the communication scheme is less than a triggering threshold; or
stopping the monitoring behavior and/or the reporting behavior based on the performance monitoring condition if the parameter value corresponding to the first-level result of the communication scheme is greater than a recovery threshold.

52. The method according to claim 51, wherein the event-triggered mode is agreed upon by a protocol.

53. The method according to any one of claims 50 to 52, further comprising:
transmitting, by the second communication device, a fourth message, wherein the fourth message is used to indicate the first communication device to trigger, based on an event, a monitoring behavior and/or a reporting behavior based on the performance monitoring condition.

54. The method according to claim 53, wherein the fourth message is used to indicate at least one of:
a triggering threshold;
a recovery threshold;
an event type that need to be reported in the communication scheme;
one or more of a value of M, an interval time of monitoring for M times, a value of N, a period of first window(s), a length of the first window(s), or a number of the first window(s);
one or more of a period, a time domain location, or a reporting number of the monitoring behavior and/or the reporting behavior based on the performance monitoring condition;
an event triggering condition;
the performance monitoring condition; or
a reporting mode.

55. The method according to any one of claims 36 to 54, further comprising:
transmitting, by the second communication device, a fifth message, wherein the fifth message is used to indicate a threshold and/or accuracy required for evaluating a first-level result of the communication scheme.

56. The method according to claim 46, 48, 49, 53, 54 or 55, wherein a type of the message comprises at least one of:
a medium access control control element (MAC CE), a radio resource control (RRC) signaling, an RRC reconfiguration message, a system broadcast, a master information block (MIB), a system information block (SIB), or an SIB1.

57. The method according to any one of claims 36 to 56, wherein the first communication device is a terminal device, and the second communication device is a network device.

58. The method according to any one of claims 36 to 56, wherein the first communication device is a physical layer or a medium access control (MAC) layer of a network device, and the second communication device is a higher layer of the network device.

59. A first communication device, comprising:
a processing unit, configured to perform performance monitoring on a communication scheme; and trigger an event corresponding to the communication scheme in a case where the communication scheme meets a performance monitoring condition.

60. The first communication device according to claim 59, wherein the communication scheme comprises a communication scheme based on artificial intelligence (AI) and/or based on machine learning (ML).

61. The first communication device according to claim 59 or 60, wherein the communication scheme comprises at least one of:
a channel state information (CSI) compression scheme based on AI and/or ML;
a CSI recovery scheme based on AI and/or ML;
an AI and/or ML scheme for processing CSI prediction;
an AI and/or ML scheme for processing beam management;
an AI and/or ML scheme for processing beam selection;
an AI and/or ML scheme for processing beam prediction; or
an AI and/or ML scheme for processing positioning.

62. The first communication device according to any one of claims 59 to 61, wherein a case in which the communication scheme meets the performance monitoring condition comprises:
performing the performance monitoring on the communication scheme for M times, to obtain N first-level results of the communication scheme; and
obtaining a second-level result of the communication scheme based on the N first-level results of the communication scheme;
wherein M is greater than or equal to 1; N is greater than or equal to 1, and N is less than or equal to M.

63. The first communication device according to any one of claims 59 to 62, wherein a case of performing the performance monitoring on the communication scheme for M times to obtain N first-level results of the communication scheme comprises at least one of:
performing the performance monitoring on the communication scheme for a single time to obtain a single first-level result of the communication scheme;
performing the performance monitoring on the communication scheme for M times to obtain M first-level results;
performing the performance monitoring on the communication scheme for M times to obtain N or consecutive N first-level results;
performing the performance monitoring on the communication scheme for M times within one or more first windows to obtain M first-level results; or
performing the performance monitoring on the communication scheme for M times within one or more first windows to obtain N or consecutive N first-level results;
wherein M is greater than 1, and N is less than M.

64. The first communication device according to any one of claims 59 to 63, further comprising:
a first receiving unit, configured to receive a first message, wherein the first message comprises relevant information of the performance monitoring condition.

65. The first communication device according to claim 64, wherein the relevant information of the performance monitoring condition comprises at least one of: a value of M of performing the performance monitoring on the communication scheme for M times by the first communication device, an interval time of the monitoring for M times, a value of N of N first-level results of the performance monitoring for M times, a period of first window(s) of the performance monitoring for M times, a length of the first window(s), or a number of the first window(s).

66. The first communication device according to any one of claims 59 to 65, wherein the performance monitoring condition comprises a first condition, and the first condition is used for triggering a first event.

67. The first communications device according to claim 66, wherein the performance monitoring condition further comprises a second condition, and the second condition is used to trigger a second event.

68. The first communication device according to claim 67, wherein the second condition is different from the first condition, a first-level result corresponding to the first condition is a first performance, a first-level result corresponding to the second condition is a second performance, and the first performance is different from the second performance.

69. The first communication device according to any one of claims 59 to 68, further comprising:
a transmitting unit, configured to report indication information corresponding to the communication scheme;
wherein indication information reported in a case where a first condition is met is first indication information; and indication information reported in a case where a second condition is met is second indication information.

70. The first communication device according to any one of claims 59 to 69, wherein a monitoring behavior and/or a reporting behavior based on the performance monitoring condition is periodic.

71. The first communication device according to claim 70, further comprising:
a second receiving unit, configured to receive a second message, wherein the second message comprises at least one of following periods:
a period of reporting an first event and/or an second event; or
a period of transmitting first indication information and/or transmitting second indication information; wherein the first indication information is information transmitted for reporting the first event, and the second indication information is information transmitted for reporting the second event.

72. The first communication device according to any one of claims 59 to 69, wherein a monitoring behavior and/or a reporting behavior based on the performance monitoring condition is network-triggered.

73. The first communication device according to claim 72, wherein further comprising:
a third receiving unit, configured to receive a third message, wherein the third message is used to indicate the first communication device to perform the monitoring behavior and/or the reporting behavior based on the performance monitoring condition.

74. The first communication device according to claim 73, wherein the third message is used to indicate at least one of:
an event type that need to be reported in the communication scheme;
one or more of a value of M, an interval time of monitoring for M times, a value of N, a period of first window(s), a length of the first window(s), or a number of the first window(s);
one or more of a period, a time domain location, or a reporting number of the monitoring behavior and/or the reporting behavior based on the performance monitoring condition;
the performance monitoring condition; or
a reporting mode.

75. The first communication device according to any one of claims 59 to 69, wherein a monitoring behavior and/or a reporting behavior based on the performance monitoring condition is event-triggered.

76. The first communication device according to claim 75, wherein an event-triggered mode comprises at least one of:
triggering the monitoring behavior and/or the reporting behavior based on the performance monitoring condition if a parameter value corresponding to a first-level result of the communication scheme is less than a triggering threshold; or
stopping the monitoring behavior and/or the reporting behavior based on the performance monitoring condition if the parameter value corresponding to the first-level result of the communication scheme is greater than a recovery threshold.

77. The first communication device according to claim 76, wherein the event-triggered mode is agreed upon by a protocol.

78. The first communication device according to any one of claims 75 to 77, further comprising:
a fourth receiving unit, configured to receive a fourth message, wherein the fourth message is used to indicate the first communication device to trigger, based on an event, the monitoring behavior and/or the reporting behavior based on the performance monitoring condition.

79. The first communication device according to claim 78, wherein the fourth message is used to indicate at least one of:
a triggering threshold;
a recovery threshold;
an event type that need to be reported in the communication scheme;
one or more of a value of M, an interval time of monitoring for M times, a value of N, a period of first window(s), a length of the first window(s), or a number of the first window(s);
one or more of a period, a time domain location, or a reporting number of the monitoring behavior and/or the reporting behavior based on the performance monitoring condition;
an event triggering condition;
the performance monitoring condition; or
a reporting mode.

80. The first communications device according to claim 62, 63 or 68, wherein a first-level result comprises:
after using the communication scheme or assuming that the communication scheme is used, that the first-level result of the communication scheme is a first performance if spectrum efficiency and/or throughput is less than a first threshold; or that the first-level result of the communication scheme is a second performance if the spectrum efficiency and/or the throughput is greater than a second threshold.

81. The first communications device according to claim 62, 63 or 80, wherein a first-level result comprises:
after using the communication scheme or assuming that the communication scheme is used, that the first-level result of the communication scheme is a first performance if a block error rate (BLER) is greater than a first threshold; or that the first-level result of the communication scheme is a second performance if the BLER is less than a second threshold.

82. The first communication device according to claim 62, 63, 68, 80 or 81, wherein a first-level result comprises: after using the communication scheme or assuming that the communication scheme is used, a result of at least one of square of generalized cosine similarity (SGCS), generalized cosine similarity (GCS), mean square error (MSE) or a normalized mean square error (NMSE).

83. The first communication device according to claim 82, wherein in a case where the communication scheme is a CSI compression and/or recovery scheme, the first-level result comprises at least one of:
that a performance of the CSI compression and/or recovery scheme is a first performance if a SGCS or a GCS between input information and output information of the communication scheme is less than a first threshold; or that the performance of the CSI compression and/or recovery scheme is a second performance if the SGCS or the GCS between the input information and the output information of the communication scheme is greater than a second threshold;
that the performance of the CSI compression and/or recovery scheme is the first performance if an MSE or an NMSE between the input information and the output information of the communication scheme is greater than a first threshold; or that the performance of the CSI compression and/or recovery scheme is the second performance if the MSE or the NMSE between the input information and the output information of the communication scheme is less than a second threshold;
that the performance of the CSI compression and/or recovery scheme is the first performance if a probability that the SGCS between the input information and the output information of the communication scheme is greater than a target SGCS, or a probability that the GCS between the input information and the output information of the communication scheme is greater than a target GCS is less than a first threshold; or that the performance of the CSI compression and/or recovery scheme is the second performance if the probability that the SGCS between the input information and the output information of the communication scheme is greater than the target SGCS, or the probability that the GCS between the input information and the output information of the communication scheme is greater than the target GCS is greater than a second threshold; or
that the performance of the CSI compression and/or recovery scheme is the first performance if a probability that the MSE between the input information and the output information of the communication scheme is less than a target MSE, or a probability that the NMSE between the input information and the output information of the communication scheme is less than a target NMSE is greater than a first threshold; or that the performance of the CSI compression and/or recovery scheme is the second performance if the probability that the MSE between the input information and the output information of the communication scheme is less than the target MSE, or the probability that the NMSE between the input information and the output information of the communication scheme is less than the target NMSE is less than a second threshold.

84. The first communication device according to claim 82 or 83, wherein in a case where the communication scheme is a CSI prediction scheme, the first-level result comprises at least one of:
that a performance of the CSI prediction scheme is a first performance if a SGCS or a GCS between predicted CSI information of the communication scheme and target CSI information is less than a first threshold; or that the performance of the CSI prediction scheme is a second performance if the SGCS or the GCS between the predicted CSI information of the communication scheme and the target CSI information is greater than a second threshold;
that the performance of the CSI prediction scheme is the first performance if MSE or NMSE between the predicted CSI information of the communication scheme and the target CSI information is less than the first threshold; or that the performance of the CSI prediction scheme is the second performance if the SGCS or the GCS between the predicted CSI information of the communication scheme and the target CSI information is greater than a second threshold;
that the performance of the CSI prediction scheme is the first performance if a probability that the SGCS between the predicted CSI information of the communication scheme and the target CSI information is greater than a target SGCS, or a probability that the GCS between the predicted CSI information of the communication scheme and the target CSI information is greater than a target GCS is less than a first threshold; or that the performance of the CSI prediction scheme is the second performance if the probability that the SGCS between the predicted CSI information of the communication scheme and the target CSI information is greater than the target SGCS, or the probability that the GCS between the predicted CSI information of the communication scheme and the target CSI information is greater than the target GCS is greater than a second threshold; or
that the performance of the CSI prediction scheme is the first performance if a probability that the MSE between the predicted CSI information of the communication scheme and the target CSI information is less than a target MSE, or a probability that the NMSE between the predicted CSI information of the communication scheme and the target CSI information is less than a target NMSE is less than a first threshold; or that the performance of the CSI prediction scheme is the second performance if the probability that the MSE between the predicted CSI information of the communication scheme and the target CSI information is less than the target MSE, or the probability that the NMSE between the predicted CSI information of the communication scheme and the target CSI information is less than the target NMSE is greater than a second threshold.

85. The first communication device according to any one of claims 62, 63, 68, and 80 to 84, wherein a first-level result comprises: after using the communication scheme or assuming that the communication scheme is used, at least one of following results based on positioning accuracy:
that a performance of a positioning scheme based on AI and/or ML is a first performance if positioning accuracy obtained from an output result of the communication scheme is less than a first threshold; or that the performance of the positioning scheme based on AI and/or ML is a second performance if the positioning accuracy from the output result of the communication scheme is greater than a second threshold; or
that the performance of the positioning scheme based on AI and/or ML is a first performance if a probability that the positioning accuracy obtained from the output result of the communication scheme is greater than a target accuracy threshold is less than a first threshold; or that the performance of the positioning scheme based on AI and/or ML is a second performance if the probability that the positioning accuracy from the output result of the communication scheme is greater than the target accuracy threshold is greater than a second threshold.

86. The first communication device according to any one of claims 62, 63, 68, and 80 to 85, wherein a first-level result comprises: after using the communication scheme or assuming that the communication scheme is used, at least one of following results based on beam prediction accuracy:
that a predicted beam obtained from an output result of the communication scheme is a target beam or comprises the target beam, or is not the target beam or does not comprise the target beam;
that a performance of a beam prediction scheme is a first performance if at least one of a reference signal received power (RSRP) difference, a reference signal received quality (RSRQ) difference, a signal interference noise ratio (SINR) difference, or a beam angle difference between the predicted beam obtained from the output result of the communication scheme and the target beam is greater than a first threshold; or that the performance of the beam prediction scheme is a second performance if at least one of the RSRP difference, the RSRQ difference, the SINR difference, or the beam angle difference between the predicted beam obtained from the output result of the communication scheme and the target beam is less than a second threshold;
that the performance of the beam prediction scheme is the first performance if the predicted beam obtained from the output result of the communication scheme is not the target beam or does not comprise the target beam; or that the performance of the beam prediction scheme is the second performance if the predicted beam obtained from the output result of the communication scheme is the target beam or comprises the target beam; or
that the performance of the beam prediction scheme is the first performance if a probability that the predicted beam obtained from the output result of the communication scheme is the target beam or comprises the target beam is less than a first threshold; or that the performance of the beam prediction scheme is the second performance if the probability that the predicted beam obtained from the output result of the communication scheme is the target beam or comprises the target beam is greater than a second threshold.

87. The first communication device according to any one of claims 62, 63, 68, and 80 to 86, wherein a first-level result comprises: after using the communication scheme or assuming that the communication scheme is used, at least one of following results based on beam selection accuracy:
that a selected beam obtained from an output result of the communication scheme is a target beam or comprises the target beam, or is not the target beam or does not comprise the target beam;
that a performance of a beam selection scheme is a first performance if at least one of an RSRP difference, an RSRQ difference, an SINR difference, or a beam angle difference between the selected beam obtained from an output result of the communication scheme and the target beam is greater than a first threshold; or that the performance of the beam selection scheme is a second performance if at least one of the RSRP difference, the RSRQ difference, the SINR difference, or the beam angle difference between the selected beam obtained from the output result of the communication scheme and the target beam is less than a second threshold;
that a performance of a beam prediction scheme is the first performance if the selected beam obtained from the output result of the communication scheme is not the target beam or does not comprise the target beam; or that the performance of the beam prediction scheme is the second performance if the selected beam obtained from the output result of the communication scheme is the target beam or comprises the target beam; or
that the performance of the beam selection scheme is the first performance if a probability that the selected beam obtained from the output result of the communication scheme is the target beam or comprises the target beam is less than a first threshold; or that the performance of the beam prediction scheme is the second performance if the probability that the selected beam obtained from the output result of the communication scheme is the target beam or comprises the target beam is greater than a second threshold.

88. The first communication device according to any one of claims 62, 63, 68, and 80 to 87, wherein a first-level result comprises: that a performance of the communication scheme is a first performance if a difference between information data input into the communication scheme and expected information data of the communication scheme is greater than a first threshold; or that the performance of the communication scheme is a second performance if the difference between the information data input into the communication scheme and the expected information data of the communication scheme is less than a second threshold.

89. The first communication device according to any one of claims 62, 63, 68, and 80 to 68, wherein a first-level result comprises: after using the communication scheme or assuming that the communication scheme is used, that a performance of the communication scheme is a first performance if computing power required is insufficient; or that the performance of the communication scheme is a second performance if the computing power required is sufficient.

90. The first communication device according to any one of claims 62, 63, 68, and 80 to 89, further comprising:
a fifth receiving unit, configured to receive a fifth message, wherein the fifth message is used to indicate a threshold and/or accuracy required for evaluating a first-level result of the communication scheme.

91. The first communication device according to claim 65, 71, 73, 74, 78, 79 or 90, wherein a type of the message comprises at least one of:
a medium access control control element (MAC CE), a radio resource control (RRC) signaling, an RRC reconfiguration message, a system broadcast, a master information block (MIB), a system information block (SIB), or an SIB1.

92. The first communication device according to any one of claims 59 to 91, wherein the first communication device is a terminal device.

93. The first communication device according to any one of claims 59 to 91, wherein the first communication device is a physical layer or a medium access control (MAC) layer of a network device.

94. A second communication device, comprising:
a receiving unit, configured to receive an event triggered by a first communication device in a case where a performance monitoring condition is met.

95. The second communication device according to claim 94, wherein a communication scheme comprises a communication scheme based on artificial intelligence (AI) and/or based on machine learning (ML).

96. The second communication device according to claim 95 or 94, wherein a communication scheme comprises at least one of following:
a channel state information (CSI) compression scheme based on AI and/or ML;
an AI and/or ML scheme for processing CSI prediction;
an AI and/or ML scheme for processing beam management;
an AI and/or ML scheme for processing beam selection;
an AI and/or ML scheme for processing beam prediction; or
an AI and/or ML scheme for processing positioning.

97. The second communication device according to any one of claims 94 to 96, further comprising:
a first transmitting unit, configured to transmit a first message, wherein the first message comprises relevant information of the performance monitoring condition, and the performance monitoring condition is used for triggering an event corresponding to a communication scheme at the first communication device.

98. The second communication device according to claim 97, wherein the relevant information of the performance monitoring condition comprises at least one of:
a value of M of performing performance monitoring on the communication scheme for M times by the first communication device, an interval time of the monitoring for M times, a value of N of N first-level results of the performance monitoring for M times, a period of first window(s) of the performance monitoring for M times, a length of the first window(s), or a number of the first window(s).

99. The second communication device according to any one of claims 94 to 98, wherein the performance monitoring condition comprises a first condition, and the first condition is used for triggering a first event.

100. The second communication device according to claim 99, wherein the performance monitoring condition further comprises a second condition, and the second condition is used for triggering a second event.

101. The second communication device according to claim 100, wherein the second condition is different from the first condition, a first-level result corresponding to the first condition is a first performance, a first-level result corresponding to the second condition is a second performance, and the first performance is different from the second performance.

102. The second communication device according to any one of claims 94 to 101, wherein the receiving unit is further configured to receive indication information corresponding to a communication scheme reported by the first communication device;
wherein indication information reported in a case where a first condition is met is first indication information; and indication information reported in a case where a second condition is met is second indication information.

103. The second communication device according to any one of claims 94 to 102, wherein a monitoring behavior and/or a reporting behavior based on the performance monitoring condition is periodic.

104. The second communication device according to claim 103, further comprising:
a second transmitting unit, configured to transmit a second message, wherein the second message comprises at least one of following periods:
a period of reporting an first event and/or an second event; or
a period of transmitting first indication information and/or transmitting second indication information; wherein the first indication information is information transmitted for reporting the first event, and the second indication information is information transmitted for reporting the second event.

105. The second communication device according to any one of claims 94 to 102, wherein a monitoring behavior and/or a reporting behavior based on the performance monitoring condition is network-triggered.

106. The second communication device according to claim 105, further comprising:
a third transmitting unit, configured to transmit a third message, wherein the third message is used to indicate the first communication device to perform the monitoring behavior and/or the reporting behavior based on the performance monitoring condition.

107. The second communication device according to claim 106, wherein the third message is used to indicate at least one of:
an event type that need to be reported in a communication scheme;
one or more of a value of M, an interval time of monitoring for M times, a value of N, a period of first window(s), a length of the first window(s), or a number of the first window(s);
one or more of a period, a time domain location, or a reporting number of the monitoring behavior and/or the reporting behavior based on the performance monitoring condition;
the performance monitoring condition; or
a reporting mode.

108. The second communication device according to any one of claims 94 to 102, wherein a monitoring behavior and/or a reporting behavior based on the performance monitoring condition is event-triggered.

109. The second communication device according to claim 108, wherein an event-triggered mode comprises at least one of:
triggering the monitoring behavior and/or the reporting behavior based on the performance monitoring condition if a parameter value corresponding to a first-level result of a communication scheme is less than a triggering threshold; or
stopping the monitoring behavior and/or the reporting behavior based on the performance monitoring condition if the parameter value corresponding to the first-level result of the communication scheme is greater than a recovery threshold.

110. The second communication device according to claim 109, wherein the event-triggered mode is agreed upon by a protocol.

111. The second communication device according to any one of claims 108 to 110, further comprising:
a fourth transmitting unit, configured to transmit a fourth message, wherein the fourth message is used to indicate the first communication device to trigger, based on an event, a monitoring behavior and/or a reporting behavior based on the performance monitoring condition.

112. The second communication device according to claim 111, wherein the fourth message is used to indicate at least one of:
a triggering threshold;
a recovery threshold;
an event type that need to be reported in a communication scheme;
one or more of a value of M, an interval time of monitoring for M times, a value of N, a period of first window(s), a length of the first window(s), or a number of the first window(s);
one or more of a period, a time domain location, or a reporting number of the monitoring behavior and/or the reporting behavior based on the performance monitoring condition;
an event triggering condition;
the performance monitoring condition; or
a reporting mode.

113. The second communication device according to any one of claims 94 to 112, further comprising:
a fifth transmitting unit, configured to transmit a fifth message, wherein the fifth message is used to indicate a threshold and/or accuracy required for evaluating a first-level result of a communication scheme.

114. The second communication device according to claim 104, 106, 107, 111, 112 or 113, wherein a type of the message comprises at least one of:
a medium access control control element (MAC CE), a radio resource control (RRC) signaling, an RRC reconfiguration message, a system broadcast, a master information block (MIB), a system information block (SIB), or an SIB1.

115. The second communication device according to any one of claims 94 to 114, wherein the first communication device is a terminal device, and the second communication device is a network device.

116. The second communication device according to any one of claims 94 to 114, wherein the first communication device is a physical layer or a medium access control (MAC) layer of a network device, and the second communication device is a higher layer of the network device.

117. A communication device, comprising: a processor and a memory, wherein the memory is configured to store a computer program therein, the processor is configured to call the computer program stored in the memory and run the computer program to enable the communication device to perform the method according to any one of claims 1 to 35 or 36 to 58.

118. A chip, comprising: a processor configured to call a computer program from a memory and run the computer program to enable a device equipped with the chip to perform the method according to any one of claims 1 to 35 or 36 to 58.

119. A computer-readable storage medium configured to store a computer program, wherein the computer program, when run on a device, enables the device to perform the method according to any one of claims 1 to 35 or 36 to 58.

120. A computer program product, comprising computer program instructions, wherein the computer program instructions enable a computer to perform the method according to any one of claims 1 to 35 or 36 to 58.

121. A computer program, wherein the computer program enables a computer to perform the method according to any one of claims 1 to 35 or 36 to 58.
